(19) **Europäisches Patentamt / European Patent Office / Office européen des brevets**

(11) **EP 4 316 874 B1**

(12) **EUROPEAN PATENT SPECIFICATION**

(45) Date of publication and mention
of the grant of the patent:
**28.01.2026 Bulletin 2026/05**

(21) Application number: **22875566.6**

(22) Date of filing: **21.07.2022**

(51) International Patent Classification (IPC):
*G06Q 10/20* (2023.01)     *G06Q 10/00* (2026.01)
*B60C 19/00* (2006.01)     *B60C 11/24* (2006.01)
*B29C 73/02* (2006.01)     *B29C 73/30* (2006.01)
*B60C 99/00* (2006.01)     *G06Q 50/10* (2012.01)
*B29D 30/06* (2006.01)

(52) Cooperative Patent Classification (CPC):
**G06Q 10/20; B29C 73/02; B60C 11/246;**
**B60C 99/00; G06Q 50/10;** B29D 2030/0637

(86) International application number:
**PCT/JP2022/028288**

(87) International publication number:
**WO 2023/053689 (06.04.2023 Gazette 2023/14)**

(54) **TIRE MANAGEMENT SYSTEM, TIRE MANAGEMENT METHOD, AND PROGRAM**

REIFENVERWALTUNGSSYSTEM, REIFENVERWALTUNGSVERFAHREN UND PROGRAMM

SYSTÈME DE GESTION DE PNEU, PROCÉDÉ DE GESTION DE PNEU, ET PROGRAMME

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.10.2021 JP 2021162681**

(43) Date of publication of application:
**07.02.2024 Bulletin 2024/06**

(73) Proprietor: **Sumitomo Rubber Industries, Ltd.
Kobe-shi, Hyogo 651-0072 (JP)**

(72) Inventors:
• **MUTO, Saki
  Kobe-shi, Hyogo 651-0072 (JP)**
• **MABUCHI, Takahiro
  Kobe-shi, Hyogo 651-0072 (JP)**

(74) Representative: **Manitz Finsterwald
Patent- und Rechtsanwaltspartnerschaft mbB
Martin-Greif-Straße 1
80336 München (DE)**

(56) References cited:
CN-A- 106 079 490          DE-A1- 102018 214 404
DE-A1- 102018 214 406      JP-A- 2018 114 781
JP-A- 2018 156 124         JP-A- 2019 184 405
JP-A- 2021 047 683         JP-A- 2021 128 696
JP-A- 2021 142 980         US-A- 1 412 992
US-A1- 2020 148 010        US-A1- 2021 166 503

**Description**

TECHNICAL FIELD

The present disclosure relates to a tire management system, a tire management method, and a program that can manage information concerning a tire.

BACKGROUND ART

A rubber composition that is applied to a tire for a vehicle such as an automobile contains a rubber component (rubber material) such as SBR (styrene-butadiene rubber), as well as a reinforcing agent (carbon black, silica, etc.), sulfur, a vulcanization accelerator and the like. In addition, the tire is blended with additives for retaining the flexibility of the rubber and enhancing the performance of the tire (hereinafter also referred to as "tire performance") such as the grip performance, the braking performance, rotatability, and silence. Examples of such additives include: a softening agent for softening the rubber component; and an antioxidant (antidegradant).

The tire is deteriorated over time by external factors such as ozone, ultraviolet, and loads during use. Specifically, as the deterioration of the tire, the additives are gradually lost from the tire, or the rubber is deformed as it is affected by the external factors. When additives such as the softening agent and the antioxidant are lost from the tire, the rubber itself becomes hardened. In addition, when ozone or ultraviolet is irradiated onto the tire, the rubber component of the tire is deformed and becomes hardened. In this case, the block or the sipe formed on the tread portion becomes difficult to be bent, or the side wall of the tire becomes difficult to be bent, and the tire performance such as the grip performance and the braking performance is degraded. In addition, when the rubber component of the tire becomes hardened, cracks that have occurred to the surface of the tread portion or the sidewall easily progress into the tire, and the possibility of a tire burst increases. In particular, a studless tire contains a more amount of softening agent than a normal tire (summer tire) to have the grip performance on an ice and snow road. For this reason, the softening agent is more easily lost from the studless tire than from the normal tire, and the ground contact surface effect or the edge effect against the ice and snow road is more easily degraded in the studless tire than in the normal tire.

It is noted that as a means for restoring the tire whose tire performance has been degraded, there is known a processing method in which an old tread portion is removed and new tread rubber is stuck thereto (see PTL 1). US 2020/148010 A1 discloses a tire maintenance support system including a wear progress degree acquisition portion.

CITATION LIST

[PATENT LITERATURE]

[PTL 1] Japanese Patent Application Publication No. 2018-114781

SUMMARY OF THE INVENTION

PROBLEMS TO BE SOLVED BY THE INVENTION

Meanwhile, as a means for restoring a tire whose tire performance has been degraded, an additive may be replenished into the tire from outside by immersing the tire in a repair solution containing the additive for a predetermined time period, or applying the repair solution to the surface of the tire, without resticking the tread portion.

However, the deteriorated state of the tire differs depending on the external factor that has degraded the tire performance, and an additive suitable for restoring the deteriorated state also differs depending on the external factor. In addition, the deteriorated state of the tire also differs depending on the type of the additive lost from the tire. As a result, even if the additive is replenished from outside, the tire performance cannot be appropriately restored if the additive to be replenished to the restoration-target tire cannot be identified.

It is therefore an object of the present invention to provide a tire management system, a tire management method, and a program that can identify an appropriate restoration material that is to be replenished to restore a performance of a tire.

SOLUTION TO THE PROBLEMS

A tire management system according to the present invention includes a first acquisition processing portion, a second acquisition processing portion, and a material decision processing portion. The first acquisition processing portion acquires cause history information concerning a cause of degradation of performance of a tire mounted on a vehicle. The second acquisition processing portion acquires material information concerning one or more materials constituting the tire. The material decision processing portion decides a restoration material for restoring the performance that has been degraded, based on the cause history information acquired by the first acquisition processing portion and the material information acquired by the second acquisition processing portion.

ADVANTAGEOUS EFFECTS OF THE INVENTION

According to the present invention, it is possible to identify an appropriate restoration material that is to be replenished to restore a performance of a tire.

BRIEF DESCRIPTION OF THE DRAWINGS

[FIG. 1] FIG. 1 is a diagram showing a configuration of a tire management system according to a first embodiment of the present invention.

[FIG. 2] FIG. 2 is a schematic diagram showing an example of a vehicle.

[FIG. 3] FIG. 3 is a block diagram showing a configuration of the vehicle.

[FIG. 4] FIG. 4 is a block diagram showing a configuration of a management apparatus included in the tire management system according to the first embodiment of the present invention.

[FIG. 5] FIG. 5 is a block diagram showing a configuration of a repair agent deciding portion.

[FIG. 6] FIG. 6 is a diagram showing an example of blend data in a database portion.

[FIG. 7] FIG. 7 is a flowchart showing an example of a repair agent determination process executed by a control portion of the vehicle in the first embodiment of the present invention.

[FIG. 8] FIG. 8 is a flowchart showing an example of the repair agent determination process executed by a control portion of the management apparatus in the first embodiment of the present invention.

[FIG. 9] FIG. 9 is a flowchart showing another example of the repair agent determination process executed by the control portion of the management apparatus in a second embodiment of the present invention.

[FIG. 10] FIG. 10 is table data showing an example of registration data that is consulted when the repair agent determination process is executed.

[FIG. 11] FIG. 11 is a flowchart showing another example of the repair agent determination process executed by the control portion of the management apparatus in a third embodiment of the present invention.

[FIG. 12] FIG. 12 is a block diagram showing a configuration of a control unit of the vehicle according to a fourth embodiment of the present invention.

[FIG. 13] FIG. 13 is a flowchart showing an example of a notification output process executed by a control portion of the control unit in the fourth embodiment of the present invention.

[FIG. 14] FIG. 14 is a block diagram showing a configuration of the control unit of the vehicle according to a fifth embodiment of the present invention.

[FIG. 15] FIG. 15 is a flowchart showing an example of a restoration ratio output process executed by the control portion of the control unit in the fifth embodiment of the present invention.

[FIG. 16] FIG. 16 is a block diagram showing a configuration of the management apparatus according to a sixth embodiment of the present invention.

[FIG. 17] FIG. 17 is a diagram showing a tire information input screen displayed on a display portion of the management apparatus in the sixth embodiment of the present invention.

[FIG. 18] FIG. 18 is a diagram showing the tire information input screen displayed on the display portion of the management apparatus in the sixth embodiment of the present invention.

[FIG. 19] FIG. 19 is a flowchart showing another example of the repair agent determination process executed by the control portion of the management apparatus in the sixth embodiment of the present invention.

[FIG. 20] FIG. 20 is a flowchart showing another example of the repair agent determination process executed by the control portion of the management apparatus in the sixth embodiment of the present invention.

DESCRIPTION OF EMBODIMENTS

The following describes embodiments of the present invention with reference to the accompanying drawings. It should be noted that the following embodiments are examples of specific embodiments of the present invention and should not limit the technical scope of the present invention, which is defined in the appended claims. In addition, in each embodiment, configurations that are common to those of another embodiment are assigned the same reference signs as those of the other embodiment, and detailed description thereof is omitted.

[First embodiment]

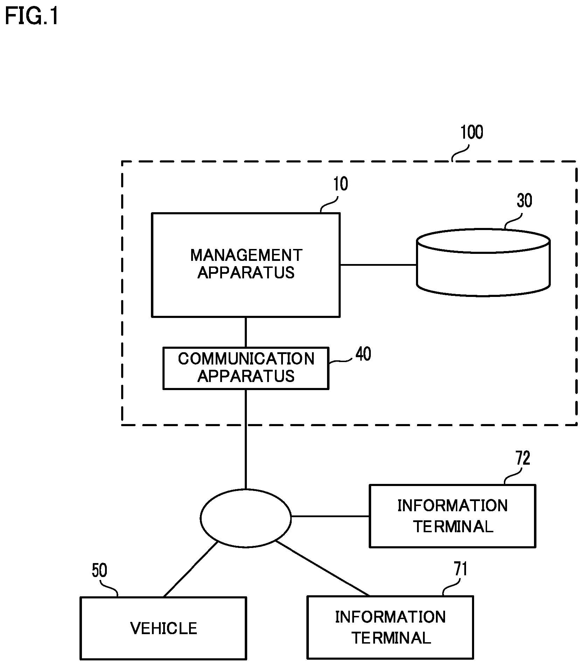

With reference to FIG. 1, a description is given of a configuration of a tire management system 100 according to a first embodiment. Here, FIG. 1 is a diagram showing the configuration of the tire management system 100.

The tire management system 100 is an example of a tire management system invention, and is configured to determine an appropriate repair agent (an example of a restoration material) that is used in a repair work for restoring tire performance that has been degraded due to use of a tire 1. Here, the tire 1 is what is called a pneumatic tire that has, at its peripheral portion, a tread portion (not shown) and a side wall that are formed from a rubber material (rubber component) such as a natural rubber (NR) or SBR (styrene-butadiene rubber).

It is noted that although in the following embodiments, a pneumatic tire is described as one example of the tire 1 that is applied to the tire management system 100, the tire 1 is not limited to the pneumatic tire. For example, the tire 1 may be a non-pneumatic tire that has a tread ring (a part corresponding to the tread portion) at its peripheral portion, and its inside is not filled with compressed air. In addition, the tire 1 may be a rubber tire that is composed of the rubber material in its entirety.

The rubber material used in the tire 1 only needs to have, as a main component, a rubber material that is used in the tire industry, and the rubber material is not particularly limited.

[Configuration of tire management system 100]

As shown in FIG. 1, the tire management system 100 mainly includes a management apparatus 10 and a database portion 30, and they are communicably connected to each other by a wired or wireless communication network. In addition, the management apparatus 10 is communicably connected to a communication apparatus 40. For example, the communication network is a wired communication network connected by a LAN, or a wireless communication network such as a leased line or a public line.

The management apparatus 10 is one element constituting the tire management system 100. The management apparatus 10 is an information processing apparatus or a server apparatus that performs a data communication with one or more vehicles 50, acquires tire information transmitted from the vehicles 50 or travel history data of the vehicles 50, and performs various types of arithmetic processing, the tire information being described below. In the present embodiment, the management apparatus 10 is, for example, installed in a central management center that comprehensively manages one or more registered vehicles 50.

It is noted that the management apparatus 10 is specifically a computer such as a server computer, a cloud server, or a personal computer connected to the communication network. In addition, the management apparatus 10 is not limited to a single computer, but may be a computer system in which a plurality of computers operate in corporation with each other, or a cloud computing system. In addition, the various processes executed in the management apparatus 10 may be executed by one or more processors in distribution. A program or computer software for operating the tire management system 100 is installed in the management apparatus 10.

The management apparatus 10 decides the repair agent for restoring the tire performance that has been degraded due to use, based on the tire information transmitted from the vehicles 50, or the travel history data of the vehicles 50, the tire information being described below. In addition, the management apparatus 10 outputs information indicating the decided repair agent (repair agent information) to a predetermined output destination. The output destination is, for example, a display device 502 loaded in the vehicle 50, an information terminal 71 carried by a user, or an external apparatus such as an information terminal 72 installed in a repair business office. The repair business office is, for example, a business office for performing a repair or maintenance of the vehicles 50, and a repair work for restoring the performance of the tire 1. It is noted that the display device 502 and the information terminal 71, 72 are an example of a predetermined output destination.

The database portion 30 is a storage device such as HDD or SSD communicably connected to the communication network. The database portion 30 stores various types of information and data that are used in the tire management system 100. The database portion 30 is configured as an external device such as: a storage device in another server apparatus that can perform a data communication with the management apparatus 10; or a network attached storage connected to a network in such a way as to independently transmit and receive data on the communication network. It is noted that the database portion 30 may be what is called a cloud storage connected via the Internet. In addition, the database portion 30 may be a storage device provided in the management apparatus 10, or an external storage device connected to the management apparatus 10 by a local network.

The communication apparatus 40 communicably connects the management apparatus 10 to external apparatuses such as the vehicles 50 and the information terminal 71, 72 by a wireless communication network using a leased line, a public line, or a mobile telephone line. The communication apparatus 40 transmits and receives data or signals to/from the external apparatuses. For example, the communication apparatus 40 communicates with the vehicle 50 and receives state data output from the vehicle 50, the state data being described below. Upon receiving the state data from the vehicle 50, the communication apparatus 40 transmits the received state data to the management apparatus 10.

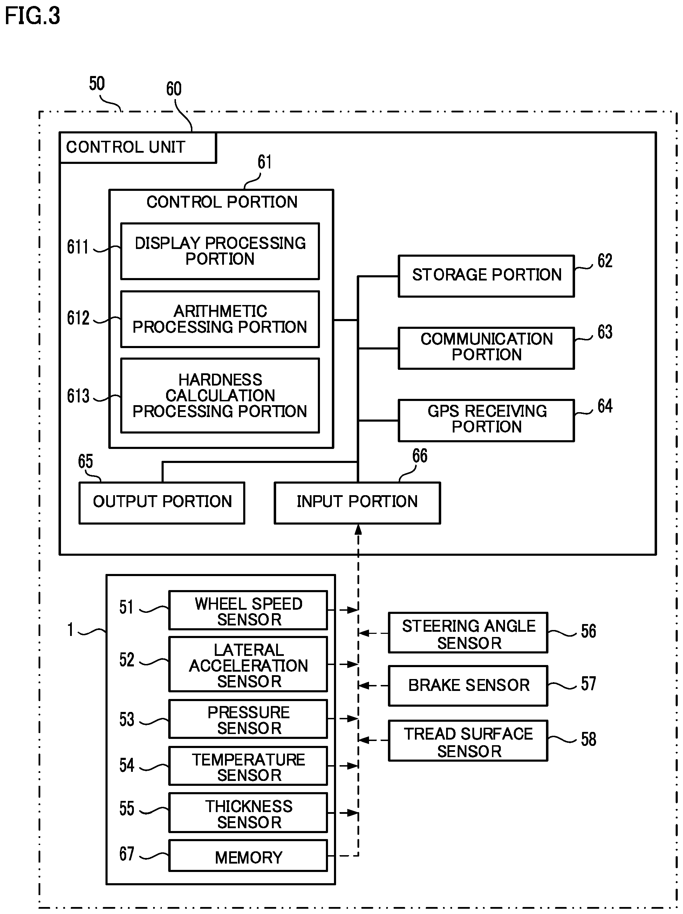

In addition, the communication apparatus 40 transmits results of various calculations and notifications output from the management apparatus 10, to the vehicle 50, the information terminal 71, or the information terminal 72. The communication apparatus 40 includes an antenna (not shown). The antenna is used in wireless communications performed with a communication portion 63 (see FIG. 3) included in a control unit 60 of the vehicle 50, or a communication portion (not shown) of the information terminal 71, 72.

The information terminal 71, 72 is an information processing apparatus such as a smartphone, a tablet terminal, a notebook personal computer, or a desktop personal computer. The information terminal 71 is, for example, an information processing apparatus used by a user who is an owner or a driver of the vehicle 50 or the tire 1. In addition, the information terminal 72 is an information processing apparatus installed in a repair business office where a repair or maintenance of the vehicle 50 and a repair work for restoring the performance of the tire 1 are performed.

The information terminal 71, 72, upon receiving calculation results of various types of arithmetic processing executed by the management apparatus 10 or notifications output from the management apparatus 10, displays the calculation results or the notifications on a display screen of a display portion provided in the information terminal 71, 72. Accordingly, a program or computer software for transmitting the various types of information to the management apparatus 10 in corporation with the tire management system 100, or for displaying the calculation results on the display screen is installed in the information terminal 71, 72.

[Vehicle 50]

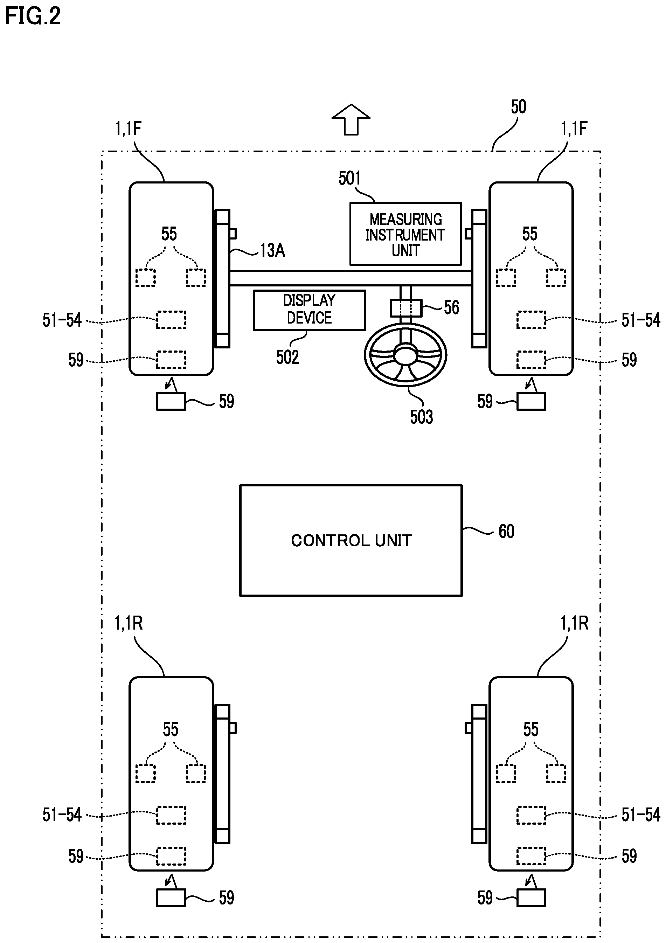

The following describes, with reference to FIG. 2 and FIG. 3, the vehicle 50 on which the tires 1 are mounted. Here, FIG. 2 is a schematic diagram showing an example of the vehicle 50. FIG. 3 is a block diagram showing a configuration of the vehicle 50.

As shown in FIG. 2, the vehicle 50 is, for example, a four-wheel passenger car including a total of four wheels at the front and the rear, the tire 1 attached to each of the wheels. In the present embodiment, the vehicle 50 is, for example, a front engine-front drive car (FF car). Tires 1F attached to the front wheels are driving tires, and tires 1R attached to the rear wheels are driven tires. It is noted that the driving method and the steering method of the vehicle 50 are not limited to specific ones. For example, the driving method of the vehicle 50 may be different from that of the FF car, and the steering method of the vehicle 50 may be different from the front wheel steering method.

In addition, the vehicle 50 is not limited to the four-wheel passenger car, but may be a passenger car with any number of wheels other than four, a large-sized vehicle such as a truck or a bus, a motorcycle, a racing vehicle, an industrial vehicle, a special vehicle, or a vehicle for loading such as a trailer or a carriage.

As shown in FIG. 3, the vehicle 50 includes various types of sensors such as a wheel speed sensor 51, a lateral acceleration sensor 52, a pressure sensor 53, a temperature sensor 54, a thickness sensor 55, a steering angle sensor 56, a brake sensor 57, and a tread surface sensor 58. The sensors 51 to 55 are fixed to an inner space surface of the tire 1 via a mount member (not shown).

Each of the sensors 51 to 55 is connected to a transmitter (not shown) installed at the tire 1. Detection values of each of the sensors 51 to 55 are transmitted to the control unit 60 via the transmitter.

Each of the sensors 51 to 55 may have any configuration as far as it can output a detection value of the detection object or a detection signal indicating the detection value, and the attachment position and the detection method thereof are not particularly limited. It is noted that when each of the sensors 51 to 55 is connected to the control unit 60 in such a way as to communicate in a wireless or wired manner, the detection values may be transmitted individually from each of the sensors 51 to 55 to the control unit 60.

The wheel speed sensor 51 detects a wheel speed signal (rotation speed information) of the tire 1 during a travel. A control portion 61 of the control unit 60 calculates, based on the wheel speed signal received from the wheel speed sensor 51, the number of rotations of the tire 1 (the number of tire rotations), a travel speed of the vehicle 50, and an acceleration of the vehicle 50 in a travelling direction. The control portion 61 stores, as an example of travel history data of the vehicle 50 using the tire 1, in a storage portion 62 of the control unit 60: an accumulated number of tire rotations that indicates a cumulative value of the calculated number of rotations; a travel speed variation history that indicates a time-series variation of the travel speed; and an acceleration variation history that indicates a time-series variation of the acceleration.

The lateral acceleration sensor 52 detects an acceleration in the lateral direction (lateral-direction acceleration) applied to the tire 1 during a travel. The control portion 61 stores, in the storage portion 62 of the control unit 60, a lateral acceleration variation history that indicates a time-series variation of the lateral-direction acceleration, as an example of the travel history data.

It is noted that excessive number of tire rotations, travel speed, acceleration, or lateral-direction acceleration may apply a load to the tire 1 and degrade the tire performance of the tire 1. Accordingly, the number of tire rotations, the travel speed, the acceleration, or the lateral-direction acceleration may be a cause of degradation of the tire performance.

The pressure sensor 53 detects an air pressure in the tire 1 (tire air pressure). The control portion 61 stores in the storage portion 62 an air pressure variation history that indicates a time-series variation of the air pressure, as an example of the travel history data.

It is noted that when the tire air pressure has a value higher than a prescribed range (abnormal value), or a value lower than the prescribed value (abnormal value), it may apply a load to the tire 1 and degrade the tire performance of the tire 1. Accordingly, the tire air pressure may be a cause of degradation of the tire performance.

The temperature sensor 54 detects the temperature of the tire 1 (tire temperature) during a travel or a stop. The control portion 61 stores in the storage portion 62 a tire temperature variation history that indicates a time-series variation of the tire temperature, as an example of the travel history data. It is noted that the tire temperature variation history may be divided into a during-travel tire temperature variation history acquired during a travel of the vehicle 50 and a during-stop tire temperature variation history acquired during a stop of the vehicle 50, and they may be stored in the storage portion 62.

It is noted that an excessively high temperature of the tire 1 may apply a load to the tire 1 and degrade the tire performance of the tire 1. Accordingly, the tire temperature may be a cause of degradation of the tire performance.

The thickness sensor 55 detects a thickness of a tread portion of the tire 1 (a thickness from a band portion to a surface). The thickness sensor 55 is installed on an inner space surface of each tire 1, namely, on an inner side surface of the tread portion. In the present embodiment, two thickness sensors 55 are installed on the inner side surface: one attached at a central portion in the width direction of the inner side surface; and the other attached at an end portion in the width direction. The control portion 61 calculates a wear amount of the tread portion from the thickness of the tread portion. In addition, the control portion 61 stores in the storage portion 62 a tread wear history that indicates a change of the wear amount over time, as an example of the travel history data.

It is noted that when the tread portion of the tire 1 wears, the rubber thickness of the tread portion decreases, and it may degrade the tire performance. Accordingly, the wear amount may be a cause of degradation of the tire performance.

The steering angle sensor 56 detects a steering angle that is a rotation angle of a handle 503. For example, the steering angle sensor 56 is installed at a steering shaft of the handle 503. The steering angle sensor 56 is connected to the control unit 60 in such a way as to communicate in a wireless or wired manner, and the steering angle (detection value) detected by the steering angle sensor 56 is transmitted to the control unit 60. The steering angle sensor 56 may have any configuration as far as it can detect the steering angle of the handle 503, and the attachment position and the detection method thereof are not limited particularly.

The control portion 61 stores in the storage portion 62 a steering angle history that indicates a time-series variation of the detected steering angle during a travel, as an example of the travel history data.

The brake sensor 57, when the driver of the vehicle 50 performs a brake operation, detects presence or absence of the operation, and detects a step amount (operation amount). The brake sensor 57 is, for example, a rotary encoder or a potentiometer installed at a brake pedal. The brake sensor 57 is connected to the control unit 60 in such a way as to communicate in a wireless or wired manner, and the presence or absence of the operation (detection value) and the step amount (detection value) detected by the brake sensor 57 is transmitted to the control unit 60. The brake sensor 57 may have any configuration as far as it can detect the detection values concerning the brake operation, and the attachment position and the detection method thereof are not limited particularly.

The control portion 61 stores in the storage portion 62 an accumulated number of times of brake operations and a step amount history as an example of the travel history data, wherein the accumulated number of times of brake operations indicates a cumulative value of the detected number of times of brake operations during a travel, and the step amount history indicates a history of the step amount for each brake operation.

It is noted that the steering angle of the handle 503, the number of times of brake operations, and the step amount affect the friction between the tire 1 mounted on the vehicle 50 and the road surface. Accordingly, the steering angle, the number of times of brake operations, and the step amount may be a cause of degradation of the tire performance.

The tread surface sensor 58 detects presence or absence of a groove on the surface of the tread portion (tread surface) of the tire 1, and information for measuring the depth of the groove. The tread surface sensor 58 may be, for example, a scanning type optical distance sensor installed at an inner surface of a tire house of the vehicle 50. The optical distance sensor emits a laser beam to the tread surface to scan in the tire width direction, and measures the distance to the tread surface as the detection object by emitting a reflection light reflected on the tread surface. In addition, since the optical distance sensor generates and outputs trace data obtained by tracing the uneven shape of the tread surface in the width direction, the control portion 61 of the control unit 60 can determine the presence or absence of a groove on the tread portion and measure the depth of the groove based on the trace data. It is noted that a plurality of reflection type photo interrupters (also called photo reflectors) arranged on the inner surface of the tire house along the width direction may be applied instead of the optical distance sensor. In addition, a camera for picking up an image of the tread surface or a line sensor for detecting a shape in the tire width direction may be applied instead of the optical distance sensor.

The control portion 61 stores in the storage portion 62 a tread groove history that indicates a change of the depth of the groove of the tread portion over time, as an example of the travel history data.

It is noted that the depth of the groove of the tread portion of the tire 1 affects the braking performance and the drainage performance, and thus may be a cause of degradation of the tire performance of the tire 1.

In addition, the tire 1 includes a memory 67 (an example of a storage portion) as an example of a storage device. The memory 67 is a nonvolatile storage device. The memory 67 is fixed to an inner space surface of the tire 1 via a mount member (not shown). The memory 67 is connected to the control unit 60 in such a way as to communicate in a wireless or wired manner.

Tire information is preliminarily stored in the memory 67, the tire information including identification information of the tire 1 (an example of tire identification information). The tire information includes a model number, a product name, a manufacturing year/month/day, a use, a size, and manufacturer information (maker information) of the tire 1. The identification information (the tire identification information) only needs to be able to distinguish the tire 1 from other tires, and may be the above-mentioned model number or product name. The identification information may be an ID number or a serial number assigned to each tire.

When, after the tire 1 is mounted on the vehicle 50, the key switch of the vehicle 50 is turned on, the tire information in the memory 67 is transmitted to the control unit 60, and is stored in the storage portion 62 of the control unit 60.

It is noted that the travel history data including the accumulated number of tire rotations, the travel speed variation history, the acceleration variation history, the lateral acceleration variation history, the air pressure variation history, the tire temperature variation history, the tread wear history, the steering angle history, the accumulated number of times of brake operation, the step amount history, and the tread groove history is stored not only in the storage portion 62 but also in the memory 67.

In addition, when the tire 1 mounted on the vehicle 50 is replaced with another tire 1, the travel history data in the storage portion 62 is updated to the travel history data stored in the memory 67 of the other tire 1. For example, when the tire 1 mounted on the vehicle 50 is replaced with a new, unused tire 1, the travel history data in the storage portion 62 is substantially reset. In addition, when the tire 1 mounted on the vehicle 50 is replaced with a used tire 1, the travel history data is read from the memory 67 of the used tire 1, and the travel history data in the storage portion 62 is rewritten with the read travel history data.

As shown in FIG. 3, the vehicle 50 includes the control unit 60 that comprehensively controls the vehicle 50. The control unit 60 is an information processing device configured to execute various types of arithmetic processing. The control unit 60 includes the control portion 61, the storage portion 62, the communication portion 63, a GPS receiving portion 64, an output portion 65, and an input portion 66.

The communication portion 63 is a communication interface for wirelessly connecting the control unit 60 to a predetermined communication network and executing a data communication with an external apparatus such as the communication apparatus 40 via the communication network according to a predetermined communication protocol.

The GPS receiving portion 64 receives a GPS signal sent from a GPS satellite. The received GPS signal is transmitted to the control portion 61, and is used in various types of arithmetic processing such as a process to identify position information (vehicle position information) that indicates a position of the vehicle 50 on a map, a process to identify a travel route of the vehicle 50, and a process to calculate a travel distance of the vehicle 50. Here, the vehicle position information includes a stop position of the vehicle 50 during a stop, and a travelling position of the vehicle 50 during a travel.

In the present embodiment, the travel route of the vehicle 50 is identified based on the vehicle position information identified during a stop or a travel of the vehicle 50. In addition, the travel distance of the vehicle 50 is calculated based on the vehicle position information. The control portion 61 stores the vehicle position information in the storage portion 62 as an example of the travel history data. In addition, the control portion 61 stores travel route information and travel distance information in the storage portion 62 as an example of the travel history data, wherein the travel route information indicates the travel route, and the travel distance information indicates the travel distance. It is noted that the vehicle position information, the travel route information, and the travel distance information are stored in the memory 67 of the tire 1, as well.

It is noted that an environment around the stop or travelling position of the vehicle 50, the state of a road surface on which the vehicle 50 travels, the travel distance of the vehicle 50 and so on may apply a load to the tire 1 and degrade the tire performance of the tire 1. For example, when the environment is inferior, when the vehicle 50 is travelling on a rough road surface, or when the travel distance is excessively long, an excessive load is applied to the tire 1. Accordingly, the vehicle position, the travel route, and the travel distance may be a cause of degradation of the tire performance.

The storage portion 62 is a nonvolatile storage medium or storage device, such as a flash memory, for storing various types of information. For example, a control program for causing the control portion 61 to execute various types of processing is stored in the storage portion 62. The control program had been stored in an external storage apparatus, such as a server apparatus or an external storage, that can be communicably connected to the communication portion 63, and was read from the external storage apparatus and stored (copied) into the storage portion 62. Alternatively, the control program may have been recorded in a non-transitory manner in a computer-readable recording medium such as a CD or a DVD, and may have been read therefrom by a reader (not shown) electrically connected with the control unit 60 and stored (copied) into the storage portion 62.

In addition, the storage portion 62 stores detection values and data transmitted from each of the sensors 51 to 58, the vehicle position information detected by the GPS receiving portion 64, and the like. In addition, the storage portion 62 stores the above-mentioned various types of history information (the accumulated number of tire rotations, the travel speed variation history, the acceleration variation history, the lateral acceleration variation history, the air pressure variation history, the tire temperature variation history, the tread wear history, the steering angle history, the accumulated number of times of brake operation, the step amount history, and the tread groove history). In addition, the storage portion 62 stores the vehicle position information, the travel route information, the travel distance information and the like.

The output portion 65 is an interface that outputs, in a wireless or wired manner, results of various processes executed by the control portion 61, data in the storage portion 62, and the like. For example, a measuring instrument unit 501 and a display device 502 installed in the vehicle 50 are connected to the output portion 65. In addition, the memory 67 provided in the tire 1 is connected in a wireless or wired manner to the output portion 65. For example, the control portion 61 outputs the speed information or the like to the measuring instrument unit 501, and outputs various types of information to the display device 502 in response to display requests from the driver or the like. In addition, the control portion 61 transfers various types of data in the storage portion 62 to the memory 67 via the output portion 65.

The input portion 66 is an interface that is connected in a wireless or wired manner to the various sensors 51 to 58, the memory 67 and the like installed in the vehicle 50. Signals output from the sensors 51 to 58, data read from the memory 67 and the like are input to the input portion 66.

The control portion 61 includes control equipment such as a CPU, a ROM, and a RAM. The CPU is a processor that executes various types of arithmetic processing. The ROM is a nonvolatile memory in which control programs, such as BIOS and OS, for causing the CPU to execute various processes are preliminarily stored. The RAM is a volatile or nonvolatile memory for storing various types of information and is used as a temporary storage memory (working area) for the various processes executed by the CPU. The control portion 61 executes various processes described below by causing the CPU to execute the various control programs preliminarily stored in the ROM or the storage portion 62.

The control portion 61 includes various processing portions such as a display processing portion 611, an arithmetic processing portion 612, and a hardness calculation processing portion 613. The control portion 61 functions as the various processing portions when the CPU executes various processes in accordance with the control programs. It is noted that a part or all of the processing portions included in the control portion 61 may be composed of an electronic circuit. In addition, one or more processes executed by each of the display processing portion 611, the arithmetic processing portion 612, and the hardness calculation processing portion 613 may be executed by different processing portions. In addition, the control programs may be programs for causing a plurality of processors to function as the various processing portions.

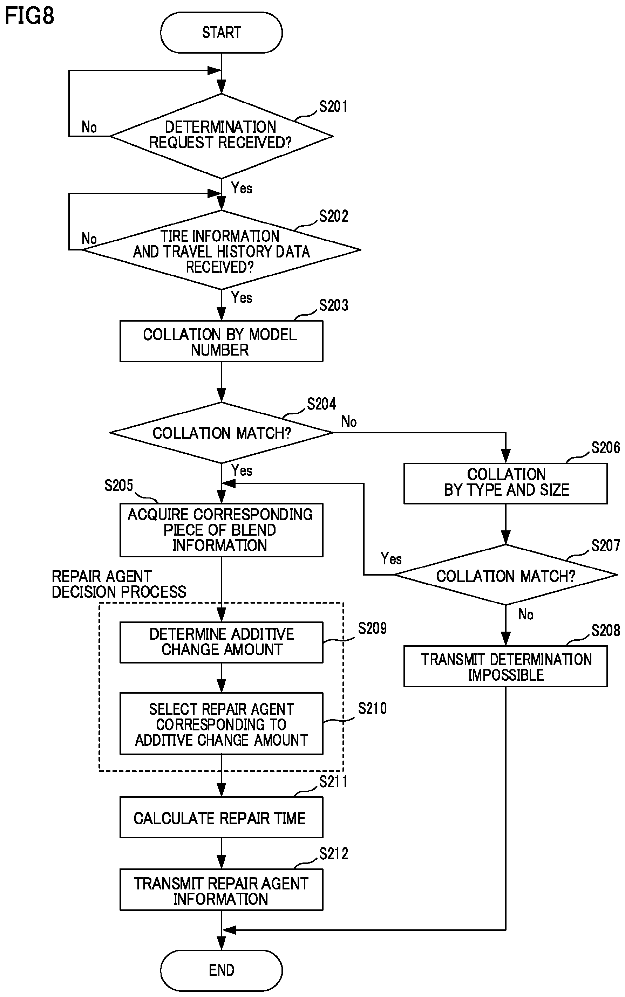

The display processing portion 611 performs a process to display various types of information on the display device 502 of the vehicle 50. For example, upon receiving, from the management apparatus 10, a determination result of a repair agent determination process (see FIG. 8) described below, or upon obtaining a determination result of a repair agent deciding portion 113 described below, the display processing portion 611 displays the determination result on a display screen of the display device 502.

The arithmetic processing portion 612 performs a process to calculate state data that indicates the state of the vehicle 50 or the tire 1, based on the detection values and data input from each of the sensors 51 to 58 and the GPS receiving portion 64 to the input portion 66. Here, the state data includes, for example, the number of rotations of the tire 1 (the number of tire rotations), the travel speed of the vehicle 50, the acceleration of the vehicle 50 in the travelling direction, the lateral-direction acceleration applied to the tire 1, the air pressure in the tire 1 (tire air pressure), the temperature of the tire 1 (tire temperature), the wear amount of the tread portion of the tire 1, the steering angle of the vehicle 50, the number of times of brake operation, the brake step amount, and the depth of the groove of the tread portion of the tire 1.

The number of tire rotations, the travel speed, and the acceleration can be calculated based on the detection value (wheel speed signal) of the wheel speed sensor 51. The lateral-direction acceleration can be calculated based on the detection value of the lateral acceleration sensor 52. The tire air pressure can be calculated based on the detection value of the pressure sensor 53. The tire temperature can be calculated based on the detection value of the temperature sensor 54.

The wear amount can be calculated based on the detection value of the thickness sensor 55. The wear amount is a difference between a thickness average value and an initial thickness that are described below. The thickness average value is an average value of thicknesses calculated based on detection values of two thickness sensors 55 installed separated from each other in the width direction on the inner space surface of the tire 1. The initial thickness is an initial thickness of the tread portion of the tire 1 in an unused state. It is noted that the wear amount can be calculated with high precision by increasing the number of thickness sensors 55 installed on the tire 1 or by adjusting the installation positions thereof as appropriate.

The steering angle can be calculated based on the detection value of the steering angle sensor 56. The number of times of brake operation and the brake step amount can be calculated based on the detection value of the brake sensor 57.

The depth of the groove of the tread portion of the tire 1 can be calculated based on data output from the tread surface sensor 58.

In addition, the arithmetic processing portion 612 performs, based on the vehicle position information, the process to identify the travel route of the vehicle 50, and the process to calculate the travel distance of the vehicle 50.

Examples of the type of travel route to be identified include: a flat road, a mountain road (what is called a mountain path), an urban area road, and a highway. In addition, the type of travel distance includes not only the total travel distance travelled by the vehicle 50, but also the travel distance for each of the above-mentioned travel routes (flat road travel distance, mountain road travel distance, urban area travel distance, and highway travel distance).

The above-described various types of history information that are obtained from the state data acquired by the arithmetic processing portion 612, the vehicle position information, the travel route information, and the travel distance information concerning the vehicle 50 and the like are accumulatively stored in the storage portion 62 as the travel history data, together with the identification information of the tire 1. Such travel history data is history information on causes of degradation of the performance of the tire 1, and is an example of cause history information. The travel history data is used in the determination process for determining a reduced amount of an additive (hereinafter referred to as "additive change amount") in the tire 1 that is reduced due to loads applied to the tire 1. The additive change amount indicates a change amount of an additive whose blend ratio has been reduced.

The additive change amount or information indicating a reduced additive (additive information) indicates a deteriorated content of the tire 1. That is, the additive change amount and the additive information are an example of a deteriorated content. For example, when the tire 1 is used and an additive is lost and reduced in the tire 1, the tire 1 is deteriorated and the performance of the tire 1 is degraded. When, as an additive, a softening agent such as oil is reduced, the hardness of the tire 1 increases, and the grip force and the braking force of the tread portion of the tire 1 is degraded. In addition, when, as an additive, an antioxidant is reduced, cracking tends to occur on the tire 1.

It is noted that the travel history data stored in the storage portion 62 is, for example at a timing when the vehicle 50 stops and the key is turned off, transferred to the memory 67 of each tire 1 via the output portion 65 and is stored in the memory 67 too. With this configuration, even when the tire 1 is removed from the vehicle 50 and mounted on another vehicle 50 as a used tire, the travel history data of the tire 1 can be handed over to the other vehicle 50.

The hardness calculation processing portion 613 performs a process to calculate a hardness of the tread portion of the tire 1 (hereinafter referred to as "tire hardness"). For example, the hardness calculation processing portion 613 calculates the tire hardness of the tread portion of the current tire 1 based on the wear amount of the tread portion (an example of cause history information) calculated by the arithmetic processing portion 612. The tire hardness is an index indicating the difficulty of being deformed when a force is applied to the tire 1. In general, the tire hardness is represented by a numerical value measured by using a hardness meter (type D durometer) conforming to the Japan Industrial Standards (JIS K6253). In the present embodiment, the tire hardness is calculated based on a well-known relationship that the thickness of a cap tread of the tread portion of the tire 1 is proportional to the tire hardness. The cap tread is a part of the tread portion of the tire 1 on which the tread pattern is notched. Specifically, the hardness calculation processing portion 613 calculates a current cap thickness by subtracting the wear amount of the tire 1 being used from the thickness of the cap tread of the tire 1 in an unused state, and the hardness calculation processing portion 613 calculates the tire hardness by multiplying the current cap thickness by a predetermined coefficient.

It is noted that the hardness calculation processing portion 613 is not limited to the above-described calculation example. For example, a longitudinal rigidity G obtained by a well-known calculation method disclosed in Japanese Patent Application Publication No. 2010-76702 may be used as an approximate value of the tire hardness.

In the present embodiment, the control portion 61 stores the tire hardness calculated by the hardness calculation processing portion 613 in the storage portion 62 as an example of the travel history data. It is noted that the tire hardness is stored in the memory 67 of the tire 1 as well.

Meanwhile, the tire 1 mounted on the vehicle 50 receives various types of loads while the vehicle 50 is stopped in a parking lot or the like or is being run. Examples of such loads include weight loads such as: a load in the gravity direction that is applied since the tires 1 support the vehicle 50; a load that is applied when the vehicle 50 increases or decreases the speed or performs the braking; a load that is applied when the air pressure of the tire 1 increases or decreases; and a load in the lateral direction that is applied when the vehicle 50 performs a turning operation. Other examples of such loads include thermal loads such as: a load by the ambient temperature of the vehicle 50 or the temperature transmitted from the road surface temperature; a load by the heat that occurs due to irradiation of the sunlight; and a load by the frictional heat that occurs between the tire 1 and the road surface during a travel. In addition, other examples of such loads include a chemical load due to deformation of the rubber that is caused when ozone or ultraviolet contained in the sunlight is irradiated onto the rubber part of the tire 1.

When the above-described loads are applied to the tire 1, the rubber component of the tire 1 is deteriorated over time. Specifically, the rubber component of the tire 1 becomes hardened. When the rubber component becomes hardened, the block or sipe formed on the tread portion becomes difficult to be bent, or the side wall of the tire 1 becomes difficult to be bent, and the tire performance such as the grip performance and the braking performance is degraded. That is, the above-described loads are causes (performance degradation causes) that degrade the tire performance of the tire 1. It is noted that the tire performance mainly includes the grip performance with respect to the road surface, the braking performance on a brake operation, as well as straight advance stability, handling stability, rotatability, ride comfort, silence, drainage performance, dry performance, and fuel economy.

As a means for restoring the tire 1 whose tire performance has been degraded, a repair agent such as a softening agent may be replenished to the tire 1 from outside. For example, it is possible to replenish the repair agent to the rubber component in the tire 1 from outside, by immersing the tire 1 in a repair solution containing the repair agent for a predetermined time period, or applying the repair solution to the surface of the tire 1. However, to restore the tire performance that has been degraded, it is preferable to identify a repair agent corresponding to a load that is the cause of the degraded performance, and repair the tire 1 using the repair agent.

In the present embodiment, the repair agent determination process (see FIG. 8) described below is executed by a control portion 11 of the management apparatus 10. This makes it possible to identify an appropriate repair agent that is to be replenished to restore the performance of the tire 1.

Here, as the repair agent, softening agent for softening the rubber component may be used, and specific examples thereof include aromatic resin, oil such as process oil or vegetable oil, diene-based liquid polymer, and polyterpene resin.

More specifically, the aromatic resin is polymer including aromatic compound as a constituting component. The aromatic compound may be any compound having an aromatic ring, such as: phenol compound such as phenol, alkylphenol, alkoxyphenol, or phenol containing unsaturated hydrocarbon group; naphthol compound such as naphthol, alkyl naphthol, alkoxy naphthol, or naphthol containing unsaturated hydrocarbon group; styrene derivative such as styrene, alkylstyrene, alkoxystyrene, or styrene containing unsaturated hydrocarbon group; coumarone; or indene.

In addition, for example, $\alpha$-methyl styrene-based resin, coumarone-indene resin, aromatic modified terpene resin, or terpene aromatic resin may be adopted as the aromatic resin.

Examples of the $\alpha$-methyl styrene-based resin include: $\alpha$-methyl styrene homopolymer; and copolymer of $\alpha$-methyl styrene and styrene. The coumarone-indene resin is resin containing coumarone and indene as monomer components that constitute the skeleton (main chain) of resin. Examples of monomer components, other than coumarone and indene, that may be included in the skeleton include styrene, methylindene, and vinyl toluene. Examples of the aromatic modified terpene resin include: resin obtained by modifying terpene resin with aromatic compound (preferably styrene derivative, more preferably styrene); and resin obtained by hydrogenating this resin. Examples of the terpene aromatic resin include: resin obtained by copolymerizing terpene compound and aromatic compound (preferably styrene derivative or phenol compound, more preferably styrene); and resin obtained by hydrogenating this resin.

Examples of the $\alpha$-methyl styrene-based resin include SYLVARES SA85 (SYLVATRAX 4401), SA100, SA120, and SA140 (made by Kraton Corporation, USA), and FTR0100, 2120, 2140, and 7100 (made by Mitsui Chemicals, Inc.). Examples of the coumarone-indene resin include G-90 and V-120 (made by Nitto Chemical Co., Ltd.), and NOVARES C10, C30, C70, C80, C90, C100, C120, C140, and C160 (Rutgers Chemicals, Germany). Examples of the aromatic modified terpene resin include YS resin TO85, TO105, TO115, and TO125, CLEARON M125, M115, M105, K100, and K4100 (made by Yasuhara Chemical Co., Ltd.). Examples of the terpene aromatic resin include YS POLYSTER U130, U115, T160, T145, T130, T115, T100, T80, T30, S145, G150, G125, N125, K125, TH130, and UH115 (made by Yasuhara Chemical Co., Ltd.), Tamanol 803L and 901 (made by Arakawa Chemical Industries, Ltd.), and SYLVARES TP95, TP96, TP300, TP2040, TP2019, TP2040HM, TP2040LO, TP7042, TP105, and TP115 (made by Kraton Corporation, USA).

Examples of the oil include process oils, vegetable oils, and mixtures thereof. Examples of the process oils include paraffinic process oil (paraffinic oil) used as a plasticizer, aromatic process oil (aromatic oil), and naphthenic process oil (naphthenic oil). Examples of the vegetable oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. These may be used alone, or two or more of these may be used in combination.

The diene-based liquid polymer may any diene-based polymer having a weight average molecular weight of 50,000 or less, and examples of the diene-based liquid polymer include styrene-butadiene copolymer (rubber), butadiene polymer (rubber), isoprene polymer (rubber), and acrylonitrile-butadiene copolymer (rubber).

Examples of the polyterpene resin include terpene resins such as $\alpha$-pinene resin, $\beta$-pinene resin, limonene resin, dipentene resin, and $\beta$-pinene/limonene resin, as well as hydrogenated resins obtained by hydrogenating these terpene resins.

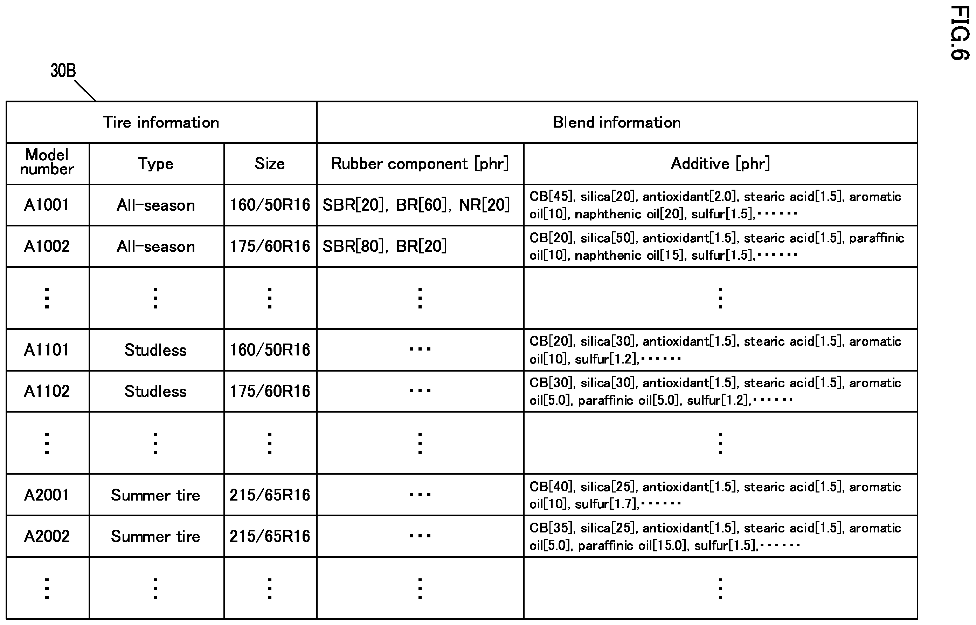

The database portion 30 stores, in a storage medium, various types of data that are used in the tire management system 100, in such a way as to be managed based on a predetermined data management method. The database portion 30 may be realized in various forms such as a storage device, an information processing apparatus, a cloud server, and a data server connected to the communication network. The database portion 30 includes: teacher data 30A described below; and blend data 30B (see FIG. 6) including various types of blend information of the tire 1. The blend data 30B is an example of tire material data. In addition, the database portion 30 is an example of a material information storage portion.

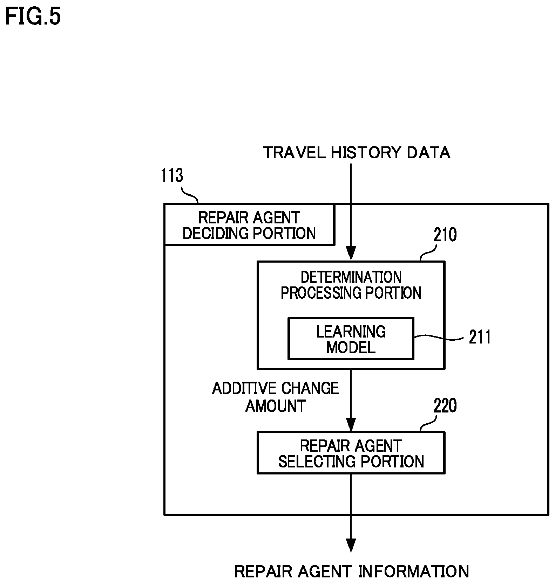

The teacher data 30A is a dataset for learning a learning model 211 (see FIG. 5) included in a determination processing portion 210 of the repair agent deciding portion 113 provided in the management apparatus 10. The teacher data 30A is used to learn a prediction function included in the learning model 211. It is noted that the learning model 211 is an example of a learning model.

Specifically, the teacher data 30A is a dataset including a large number of sets of combination data that each includes: the travel history data corresponding to a sample tire (used tire) used in the vehicle 50; and a composition analysis result of the sample tire.

The composition analysis result is, for example, a result of analysis, by a predetermined composition analysis apparatus, of a large number of sample pieces of sample tires. Specifically, the composition analysis apparatus obtains a blend ratio for each material of the sample tires, obtains a change amount for each blend ratio of the materials by consulting initial blend ratios of the materials of a new, unused sample tire, and outputs the obtained change amount as the analysis result. Here, as described below, the blend ratio is a blend ratio of each material in the rubber composition of the tire. Examples of the blend change amount include a change amount (additive change amount) representing a reduced blend ratio of an additive such as oil added to the tire. It is noted that examples of the blend change amount may include a change amount (rubber component change amount) representing a reduced blend ratio of a rubber component constituting the tire.

In addition, the composition analysis apparatus obtains a hardness of a sample tire (tire hardness), consults an initial hardness (standard hardness) of the tread portion of an unused tire, and outputs a change amount (increased amount) of the tire hardness as the analysis result.

The additive change amount is deterioration information that indicates a deterioration content of the tire, and is information corresponding to "answer" in the teacher data 30A. As the composition analysis apparatus, for example, a well-known analysis apparatus such as NMR (Nuclear Magnetic Resonance) apparatus is applicable.

In the teacher data 30A, the sets of combination data are managed by being divided into attributes, and information concerning the attributes (attribute information) is also included in the teacher data 30A. The attribute information may be, for example, pieces of the tire information concerning the tire: model number, use, product name, manufacturing year/month/day, size, and manufacturer information (maker information) of the tire 1.

It is noted that in a case where the learning model 211 has been learned by the teacher data 30A, the teacher data 30A may not be stored in the database portion 30.

The blend data 30B is aggregation of data (database) in which blend information (an example of material information) that includes types of materials constituting the tire 1, blend ratios of the materials and the like is managed for each piece of the tire information. Examples of the materials of the rubber composition that is the rubber part of the tire 1 include, as well as the rubber component (rubber material), additives such as a reinforcing agent (carbon black, silica, etc.), an antioxidant, a stearic acid, a softening agent such as oil, sulfur, a vulcanization accelerator, zinc oxide, and a coupling agent. Examples of the rubber component include SBR (styrene-butadiene rubber), BR (butadiene rubber), and NR (natural rubber).

FIG. 6 shows an example of the blend data 30B. In the blend data 30B shown in FIG. 6, the blend ratio of each material in the rubber component of the tire 1 is represented by parts by mass. Specifically, the blend data 30B shows a ratio of the blend amount (parts by mass) of each material (rubber components, additives) when the total parts by mass of each rubber component contained in the rubber composition is assumed to be 100. The blend ratio is represented by unit phr (per hundred rubber). It is noted that although in FIG. 6, model number, use of the tire, and size of the tire are shown as the tire information, other pieces of the tire information such as product name of the tire, manufacturing year/month/day, and manufacturer information may be included.

[Management apparatus 10]

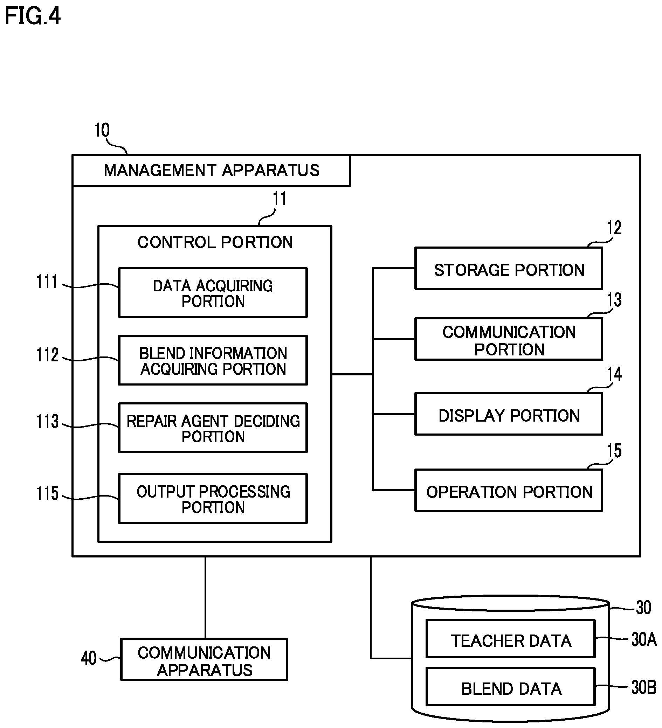

The following describes a configuration of the management apparatus 10 with reference to FIG. 4. Here, FIG. 4 is a block diagram showing the configuration of the management apparatus 10.

The management apparatus 10 is provided to realize the tire management system 100 of the present embodiment, and is configured to determine a repair agent suitable for restoring the tire performance of the tire 1 mounted on the vehicle 50 and being in use.

As shown in FIG. 4, the management apparatus 10 includes the control portion 11, a storage portion 12, a communication portion 13, a display portion 14, and an operation portion 15.

The communication portion 13 is a communication interface for connecting the management apparatus 10 to a predetermined network (communication network) in a wireless or wired manner and executing a data communication with each device connected to the network according to a predetermined communication protocol. Specifically, the communication portion 13 executes a data communication with the communication apparatus 40 and the database portion 30 via the network.

The storage portion 12 is a nonvolatile storage device such as a semiconductor memory, an HDD, or an SSD for storing various types of information and data. Although the present embodiment describes, as one example, a configuration where the storage portion 12 is provided in the management apparatus 10, for example, a part or all of the various types of information and data in the storage portion 12 may be stored in an external apparatus such as another server apparatus or storage device that can perform a data communication with the management apparatus 10 via the network or the Internet. In this case, the management apparatus 10, as necessary, reads necessary information from the external apparatus or stores information in the external apparatus.

The storage portion 12 stores a control program for causing the control portion 11 to execute various control processes, the repair agent determination process shown in FIG. 8 and described below, and the like. The control program had been stored in an external storage apparatus, such as a server apparatus or an external storage, that can be communicably connected to the communication portion 13, and was read from the external storage apparatus and stored (copied) into the storage portion 12. Alternatively, the control program may have been recorded in a non-transitory manner in a computer-readable recording medium such as a CD or a DVD, and may have been read therefrom by a reader (not shown) electrically connected with the management apparatus 10 and stored (copied) into the storage portion 12.

The display portion 14 is a display device for displaying various types of information, such as a liquid crystal display, an organic EL display, or a touch panel enabling direct touch inputs to the screen. In addition, the operation portion 15 is an input device for receiving an operation of an operator, such as a mouse, a keyboard, or a touch panel.

The control portion 11 controls the operation of each portion of the management apparatus 10. The control portion 11 includes control equipment such as a CPU, a ROM, and a RAM. The CPU is a processor that executes various types of arithmetic processing. The ROM is a nonvolatile storage medium in which control programs, such as BIOS and OS, for causing the CPU to execute various types of arithmetic processing are preliminarily stored. The RAM is a volatile or nonvolatile storage medium for storing various types of information and is used as a temporary storage memory (working area) for the various types of arithmetic processing executed by the CPU. The control portion 11 controls the management apparatus 10 by causing the CPU to execute the various control programs preliminarily stored in the ROM or the storage portion 12.

As shown in FIG. 4, the control portion 11 includes various processing portions including: a data acquiring portion 111 (an example of a first acquisition processing portion); a blend information acquiring portion 112 (an example of a second acquisition processing portion); a repair agent deciding portion 113 (an example of a material decision processing portion); and an output processing portion 115 (an example of a first output processing portion).

The control portion 11 functions as the above-described various processing portions when the CPU executes various types of arithmetic processing in accordance with the control programs. The control portion 11 or the CPU is an example of a computer that executes the control programs. It is noted that a part or all of the processing portions included in the control portion 11 may be composed of an electronic circuit. In addition, the control programs may be programs for causing a plurality of processors to function as the various processing portions.

The data acquiring portion 111 performs a process to acquire the travel history data stored in the storage portion 62 from the control unit 60 of the vehicle 50. In addition, the data acquiring portion 111 acquires the tire information stored in the storage portion 62 from the control unit 60 of the vehicle 50. In the present embodiment, when the control unit 60 transmits the travel history data and the tire information to the management apparatus 10, the control portion 11 receives the travel history data and the tire information. It is noted that as described above, the travel history data is used in the process for determining the additive change amount indicating reduction of an additive due to loads applied to the tire 1.

The blend information acquiring portion 112 performs a process to acquire, from the blend data 30B (see FIG. 6), the blend information that includes types of materials constituting the tire 1 and blend ratios of the materials. In the present embodiment, when the tire information has been transmitted from the control unit 60 to the management apparatus 10, the blend information acquiring portion 112 collates the model number included in the tire information with the blend data 30B to extract a piece of blend information corresponding to the model number from the blend data 30B. That is, the blend information acquiring portion 112 extracts, from the blend data 30B, a piece of blend information corresponding to the model number included in the tire information input to the management apparatus 10.

In addition, when a piece of blend information corresponding to the model number in the received tire information is not found in the blend data 30B, or when the tire information does not include a model number, the blend information acquiring portion 112 determines whether or not the use and the size in the received tire information are equivalent to use information and size information in the blend data 30B. Upon determining that they are equivalent, the blend information acquiring portion 112 recognizes a piece of blend information corresponding to a piece of use information and a piece of size information determined as equivalent to the use and the size, as the blend information of the tire 1, and performs a process to extract the piece of blend information from the blend data 30B.

Specifically, the blend information acquiring portion 112 consults the blend data 30B and collates the use and the size included in the tire information with the use information and the size information in the blend data 30B. Thereafter, the blend information acquiring portion 112 determines whether or not, in the blend data 30B, there are a piece of use information and a piece of size information that match the use and the size included in the tire information. Here, upon determining that there are a piece of use information and a piece of size information that match the use and the size included in the tire information, the blend information acquiring portion 112 extracts, as the blend information of the tire 1, a piece of blend information corresponding to the piece of use information and the piece of size information, from the blend data 30B. It is noted that the use and the size used in such a collation process are an example of a type of tire. In addition, information indicating the content of the use and information indicating the content of the size correspond to type information.

The repair agent deciding portion 113 performs a process to, based on the travel history data acquired by the data acquiring portion 111 and the like, decide a repair agent (an example of the restoration material) for restoring the tire performance of the tire 1 that has been degraded due to use.

The following describes the repair agent deciding portion 113 with reference to FIG. 5. As shown in FIG. 5, the repair agent deciding portion 113 includes a determination processing portion 210 (an example of a determination portion) and a repair agent selecting portion 220 (an example of a selection portion).

The determination processing portion 210 performs a process to determine the additive change amount (an example of a deterioration content) based on the travel history data. The determination processing portion 210 is a learning device that includes the learning model 211 configured to determine the additive change amount of the tire 1 based on the travel history data and the tire information. The learning model 211 is, for example, a learned model that has preliminarily been learned by a machine learning. The travel history data and the tire information are input to the determination processing portion 210.

In general, in the machine learning, algorithms such as supervised learning, unsupervised learning, and reinforcement learning are used, and in realizing these methods, a method called "deep learning" is used, wherein the deep learning learns extracting a feature quantity itself. The present embodiment describes, as one example, the learning model 211 that has been learned by the supervised learning.

The learning model 211 in the determination processing portion 210 is a learned model that is preliminarily generated based on the teacher data 30A stored in the database portion 30 and a predetermined algorithm. The algorithm is configured to learn, from the teacher data 30A that has preliminarily been input, a relationship between an input and an output thereof. The teacher data 30A includes: input values such as the travel history data of the sample tires and the attribute information (tire information); and the additive change amounts (output values) as the answer to these data and information. The teacher data 30A includes a large number of sets of combination data that are each composed of an input value and an output value. By giving the teacher data 30A as such to the determination processing portion 210, the learning model 211 of the determination processing portion 210 analyzes features, useful rules, knowledge representation, determination criteria, and so on in the teacher data 30A, and learns a prediction function that indicates a relationship between an input value and an output value. When such a relationship is learned, it is possible to predict the additive change amount (output value) of the tire 1 by applying the travel history data (input value) of the tire 1 for which the output value is unknown, to the prediction function.

In the present embodiment, the determination processing portion 210 inputs the travel history data to the learning model 211, and the learning model 211 outputs the additive change amount corresponding to the travel history data.

The additive change amount output from the determination processing portion 210 is input to the repair agent selecting portion 220, and is used in the selection process by the repair agent selecting portion 220.

The repair agent selecting portion 220 performs a process to select a repair agent corresponding to the additive change amount output from the determination processing portion 210. In the present embodiment, the repair agent selecting portion 220 performs a process to select a repair agent corresponding to, for example, an additive having the largest change amount (maximum additive). It is noted that the maximum additive is an example of the deterioration content.

For example, the repair agent selecting portion 220 performs a process to select a repair agent corresponding to the maximum additive from predetermined repair agent registration data. The repair agent registration data is table data (look-up table) in which information of a plurality of optimum repair agents corresponding to each additive is registered, and is preliminarily stored in the storage portion 62 of the management apparatus 10 or in the database portion 30. The repair agent selecting portion 220 performs a process to collate the repair agent registration data with the maximum additive, and extracts, from the plurality of repair agents included in the repair agent registration data, a repair agent corresponding to the maximum additive.

Each repair agent registered in the repair agent registration data is a repair agent that can restore a performance of the tire 1 that has been degraded due to a decrease of an additive corresponding thereto. Accordingly, the repair agent may be an additive that is the same as the maximum additive, or an additive equivalent to the maximum additive (an additive having the same function as the maximum additive). In this case, the additive is preferably a softening agent that softens the rubber component of the tire 1.

In addition, the repair agent selecting portion 220 may perform a process to select a plurality of repair agents that respectively correspond to a plurality of, for example, three, additives of highest levels in the additive change amount.

The output processing portion 115 performs a process to output results of various processes executed in the tire management system 100. In the present embodiment, the output processing portion 115 performs a process to output a determination result of a determination made by the repair agent deciding portion 113, namely repair agent information (an example of material information) that includes information of one or more repair agents selected by the repair agent selecting portion 220. As described below, the repair agent information may include information such as a repair time to be taken for a repair using the selected repair agent, information of the price of the repair agent, and a repair effect of the repair agent.

The output processing portion 115 performs a process to output the repair agent information to the vehicle 50 and display the information included in the repair agent information on the display screen of the display device 502 of the vehicle 50. In addition, upon receiving a transfer request from the vehicle 50, the output processing portion 115 may output the repair agent information to the vehicle 50 in accordance with the transfer request. It is noted that the output processing portion 115 may output the repair agent information to the vehicle 50 regardless of receiving or not receiving the transfer request. In addition, the output processing portion 115 may output the repair agent information to the information terminal 71, 72 as necessary, or in accordance with the transfer request received from the information terminal 71, 72.

It is noted that the output processing portion 115 may output, together with the repair agent information, address information, contact destination information or the like of a repair business office where a repair service using the selected repair agent is available, to the vehicle 50 or the information terminal 71. In this case, the address information or the contact destination information of the repair business office is displayed on the display screen of the display device 502 of the vehicle 50 or the information terminal 71.

[Repair agent determination process]

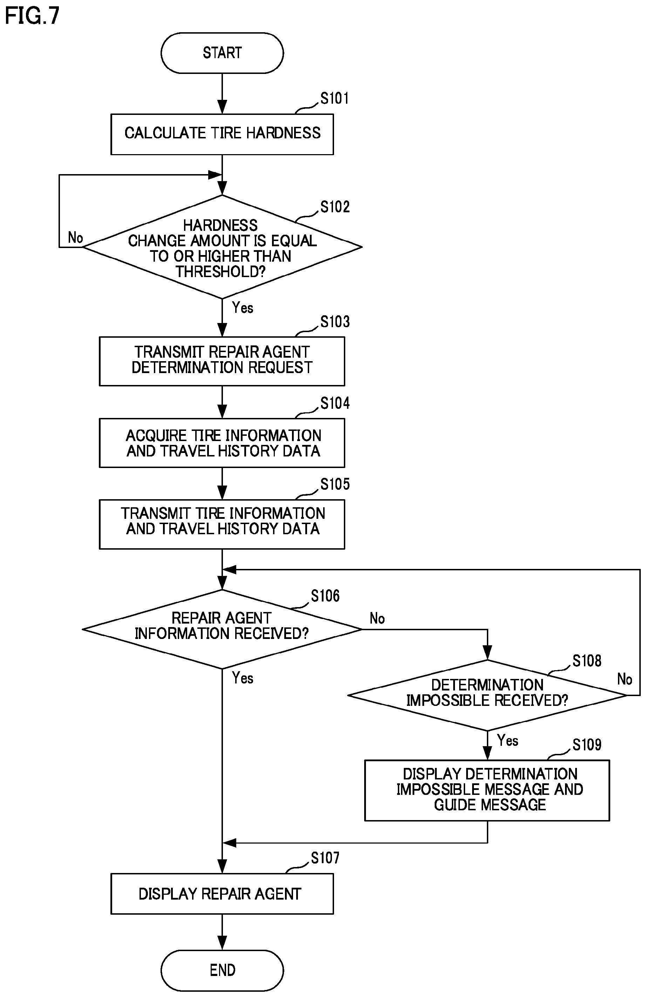

In the following, with reference to flowcharts of FIG. 7 and FIG. 8, a description is given of an example of the procedure of the repair agent determination process executed in the tire management system 100, as well as a repair agent determination method (an example of a tire management method) for determining a repair agent. Here, in the present embodiment, the repair agent determination process is performed with respect to the tire 1 in a state of being mounted on the vehicle 50.

It is noted that each process of the flowchart shown in FIG. 7 is executed by the control portion 61 of the control unit 60 included in the vehicle 50. In addition, each process of the flowchart shown in FIG. 8 is executed by the control portion 11 of the management apparatus 10. In addition, one or more steps included in the flowcharts of FIG. 7 and FIG. 8 may be omitted as necessary, and the steps may be executed in different orders as far as the same action and effect are caused.

As shown in FIG. 7, first, step S101 and the subsequent processes are started in the vehicle 50. Specifically, in step S101, the control portion 61 of the control unit 60 calculates the hardness (tire hardness) of the tire 1. The process of step S101 is executed by the hardness calculation processing portion 613 of the control portion 61.

Here, the process of step S101 is started when it is determined that a predetermined determination timing has come. The determination timing is a timing when a repair agent should be determined, and, for example, is a timing that satisfies either or both of: a condition that a predetermined time period has passed since a previous determination; and a condition that the vehicle 50 has travelled a predetermined distance since the previous determination. In addition, the determination timing may be a timing that satisfies either or both of: a condition that a travel cumulative time of the tire 1 has reached a predetermined threshold; and a condition that a travel cumulative distance of the tire 1 has reached a predetermined threshold. The conditions are stored, for example, in the storage portion 62 of the vehicle 50. In addition, the determination timing may be a timing when a driver of the vehicle 50 has input a determination instruction by, for example, operating an operation switch provided in the vehicle 50.

After the tire hardness is calculated in step S101, in step S102, the control portion 61 determines whether or not a change amount of the tire hardness (hereinafter referred to as "hardness change amount") is equal to or higher than a predetermined threshold. This determination process is performed to determine whether or not the tread portion of the tire 1 has been deteriorated to an extent that the tire 1 needs a repair due to use of the tire 1. It is noted that in step S102, the control portion 61 may determine whether or not the tire hardness is equal to or higher than an upper-limit value of an allowable range that has been determined for each of the tires 1.

When the hardness change amount is equal to or higher than the threshold, it means that due to use of the tire 1, the tread portion of the tire 1 has become harder than in an unused state, and the tire 1 is in a state of requiring a repair. On the other hand, when the hardness change amount is lower than the threshold, it means that the tire 1 is in a state of not requiring a repair.

The hardness change amount is a difference between the tire hardness calculated in step S101 and a predetermined standard hardness. The hardness of the tire 1 changes over time, the tread portion of the tire 1 becomes harder as time passes, and the numerical value of the tire hardness becomes higher. Accordingly, the hardness change amount is obtained by subtracting the tire hardness calculated in step S101 from the standard hardness. The standard hardness is the hardness of the tread portion of the tire 1 in an unused state, is preliminarily measured by a hardness meter conforming to the Japan Industrial Standards (JIS K6253), and is stored, as the tire information, in the memory 67 of the tire 1. It is noted that the standard hardness is an example of an initial performance value.

When, in step S102, it is determined that the hardness change amount is equal to or higher than the threshold, the control portion 61 performs a process to transmit a repair agent determination request to the management apparatus 10 (S103).

Subsequently, upon receiving a response signal to the determination request from the management apparatus 10, the control portion 61 performs a process to acquire the tire information and the travel history data (S104). Specifically, the control portion 61 reads, from the storage portion 62 or the memory 67, the tire information concerning the tire 1 that has been mounted, and the travel history data concerning the tire 1. Subsequently, the control portion 61 performs a process to transmit the tire information and the travel history data to the management apparatus 10 (S105). It is noted that the response signal is also a transmission request for transmitting the tire information and the travel history data to the management apparatus 10.

As shown in FIG. 8, in the management apparatus 10, upon receiving the determination request from the vehicle 50 (S201), the control portion 11 transmits a response signal to the determination request to the vehicle 50. Subsequently, the control portion 11 receives the tire information and the travel history data transmitted from the vehicle 50 (S202). The process of step S202 is executed by the data acquiring portion 111 of the control portion 11. It is noted that step S202 is an example of a first acquisition step.

Upon receiving the tire information and the travel history data, the control portion 11 performs, in step S203, a collation process based on the model number included in the tire information. Specifically, the control portion 11 consults the blend data 30B (see FIG. 6) in the database portion 30 and collates the model number information in the blend data 30B with the model number included in the tire information to determine whether or not there is a matching model number in the blend data 30B.

When, in the next step S204, it is determined that there is a matching model number in the blend data 30B (Yes in S204), the control portion 11 performs a process to acquire a piece of blend information corresponding to the model number from the blend data 30B (S205). It is noted that the process of step S205 to acquire the piece of blend information is executed by the blend information acquiring portion 112.

On the other hand, when it is determined in step S204 that there is no matching model number in the blend data 30B (No in S204), the control portion 11 performs a collation process based on the use and the size included in the tire information (S206).

Specifically, the control portion 11 consults the blend data 30B in the database portion 30 and collates the use information and the size information in the blend data 30B with the use and the size included in the tire information to determine whether or not there are matching use and size in the blend data 30B. It is noted that in step S206, the control portion 11 may perform the collation process based on either one of the use and the size included in the tire information.

Here, the use and the size used in the collation process of step S206 are an example of the type of tire. In addition, the content of the use and the size in the tire information including the model number corresponds to first type information, and the content of the use and the size in the tire information not including the model number corresponds to second type information.

It is noted that when the tire information received in step S202 does not include information indicating a model number, but includes a use and a size, the collation process of step S206 may be executed. In this case, the processes of steps S203 and S204 may be omitted.

When, in the next step S207, it is determined that there are matching use and size in the blend data 30B (Yes in S207), the control portion 11, in the next step S205, performs a process to acquire a piece of blend information corresponding to the use and the size from the blend data 30B.

It can be assumed that tires 1 having matching use information and size information are approximately equivalent tires 1. For this reason, it is considered that even when there is no model number in the blend data 30B, a piece of blend information equivalent to the blend information of the target tire 1 can be acquired based on the use information and the size information.

When it is determined in step S207 that there are no matching use and size in the blend data 30B (No in S207), it performs a process to transmit determination impossible information to the vehicle 50 (S208), wherein the determination impossible information indicates that a repair agent cannot be determined.

After the blend information is acquired in step S205, the control portion 11 performs the repair agent decision process (S209, S210) to decide a repair agent for restoring the tire performance of the tire 1. The process is performed by the repair agent deciding portion 113. It is noted that steps S209 and S210 are an example of a material decision step.

Specifically, in step S209, the control portion 11 inputs the travel history data and the tire information into the learning model 211 of the determination processing portion 210. This causes the learning model 211 to output the additive change amount in the tire 1 based on the travel history data. The process of step S209 is performed by the determination processing portion 210.

Subsequently, in step S210, the control portion 11 performs a process to select a repair agent for restoring the performance of the tire 1, wherein the repair agent corresponds to the additive change amount. The process

of step S210 is performed by the repair agent selecting portion 220.

After the repair agent to be used in the repair of the tire 1 is selected, the control portion 11 calculates the repair time to be taken for the repair work using the repair agent (S211). The control portion 11 calculates the volume of the cap tread from the thickness of the cap tread in the tread portion of the tire 1 and the tire size, and obtains a repair time corresponding to the volume. For example, the control portion 11 can obtain the repair time from a look-up table that includes a relationship between the volume and the repair time. In addition, the control portion 11 can obtain the repair time based on a relational expression that indicates a relationship between the volume and the repair time.

After the repair time is calculated, the control portion 11, in the next step S212, performs a process to transmit repair agent information including the repair agent and the repair time to the vehicle 50. The process of step S212 is performed by the output processing portion 115.

It is noted that the control portion 11 may transmit, in addition to the repair agent and the repair time, information of the price of the repair agent and information of the repair effect to be provided when the repair using the repair agent is performed, to the vehicle 50. In this case, the storage portion 12 of the management apparatus 10 preliminarily stores registration data that includes price information of a plurality of repair agents and information of the repair effect of each of the plurality of repair agents, and the control portion 11 reads a piece of price information and a repair effect corresponding to the selected repair agent from the registration data, and transmits them to the vehicle 50. It is noted that the registration data may be stored in what is called a cloud storage connected via the Internet.

As shown in FIG. 7, in the vehicle 50, upon receiving the repair agent information from the management apparatus 10 (S106), the control portion 61 performs a process to output the repair agent and the repair time included in the repair agent information to the display device 502 (S107). Specifically, the control portion 61 performs a process to display the repair agent and the repair time on the display device 502 of the vehicle 50. In addition, when the price information and the repair effect are included in the repair agent information, it displays these pieces of information on the display device 502, too. Thereafter, the series of processes end.

It is noted that the control portion 61 may output information such as the repair agent and the repair time to the information terminal 71 or the information terminal 72 such that the repair agent and the repair time are displayed on a display screen of the information terminal 71 or the information terminal 72. In addition, the repair agent information including the repair agent and the repair time may be output by the control portion 11 of the management apparatus 10 from the management apparatus 10 to the information terminal 71, 72.

On the other hand, upon receiving the determination impossible information from the management apparatus 10 (S108), the control portion 61 outputs a determination impossible message indicating that a repair agent cannot be determined, and performs a process to output a predetermined guide message. The guide message urges to carry the vehicle 50 to a repair business office that provides a repair service for restoring the performance (tire performance) of the tire 1 using a repair agent to receive the repair service. Address information, contact destination information or the like of the repair business office may be displayed together with the message.

Specifically, the control portion 61 performs a process to display each of the above-described messages on the display device 502 of the vehicle 50. In addition, the control portion 61 performs a process to output each of the above-described messages to the information terminal 71, and display them on the display screen of the information terminal 71, and the like. Thereafter, the series of processes end.

It is noted that as a repair content (repair work) provided at the repair business office, the whole tire 1 whose tire performance has been degraded may be immersed in the repair solution containing the repair agent for the repair time, or the repair solution may be applied to a repair target part (for example, the tread portion) of the tire 1 for the repair time. With such a repair, the repair agent can be replenished to the inside of the tire 1 from outside.

With the above-described configuration of the tire management system 100 according to the first embodiment, an appropriate replenishing agent that is to be replenished to restore the tire performance of the tire 1 is selected from a plurality of repair agents included in the repair agent registration data. This makes it possible for the tire management system 100 to identify an appropriate replenishing agent that is to be replenished to restore the tire performance of the tire 1.

In addition, the repair agent information is output to the display device 502, information terminal 71, or the information terminal 72. As a result, the user who receives the repair agent information from the display device 502 and the information terminal 71 can recognize the repair agent and the repair time before the repair of the tire 1 is performed. In addition, when the repair agent information is output to the information terminal 72, a repair worker of the repair business office can recognize the repair agent required for the repair of the tire 1 and the repair time. As a result, the repair worker can preliminarily prepare the repair agent and adjust the repair schedule.

It is noted that although the above-described embodiment has described a process example in which the travel history data including a plurality of pieces of history information, vehicle position information, travel route information, and travel distance information is input to the learning model 211, and the additive change amount is output from the learning model 211, the present disclosure is not limited to this process example. For example, the present disclosure includes a process example in which at least one or more of a plurality of pieces of travel history data are input to the learning model 211, and the additive change amount is output from the learning model 211.

In addition, although the above-described embodiment has described a process example in which the additive change amount is output from the learning model 211, the output value that is output is not limited to the additive change amount. For example, the learning model 211 may input the travel history data and output a deterioration cause that has degraded the tire performance of the tire 1. In this case, the learning model 211 needs to be learned by the teacher data 30A that includes: input values such as the travel history data of the sample tires and the attribute information (tire information); and one or more deterioration causes (output values) as answer to these pieces of data and information. Here, examples of the deterioration causes include the weight load, the thermal load, and the chemical load. In addition, the weight load may be subdivided into: a load in the gravity direction; a load that is applied when the vehicle 50 increases or decreases the speed or performs the braking; a load that is applied when the air pressure of the tire 1 increases or decreases; and a load in the lateral direction that is applied when the vehicle 50 performs a turning operation. In addition, the thermal load may be subdivided into: a load by the ambient temperature of the vehicle 50 or the temperature transmitted from the road surface temperature; a load by the heat that occurs due to irradiation of the sunlight; and a load by the frictional heat that occurs between the tire 1 and the road surface during a travel.

In addition, although the above-described embodiment has described a configuration example in which the hardness calculation processing portion 613 is realized by the control portion 61 of the control unit 60, and the data acquiring portion 111, the blend information acquiring portion 112, the repair agent deciding portion 113, and the output processing portion 115 are realized by the control portion 11 of the management apparatus 10, all or a part of these processing portions may be realized by one or more of: the control portion 61 of the control unit 60; a control portion (processor) in an on-vehicle device installed in the vehicle 50; and the control portion 11 of the management apparatus 10. Of course, the tire management system 100 may be realized by only the management apparatus 10, the on-vehicle device, or the control unit 60.

[Second embodiment]

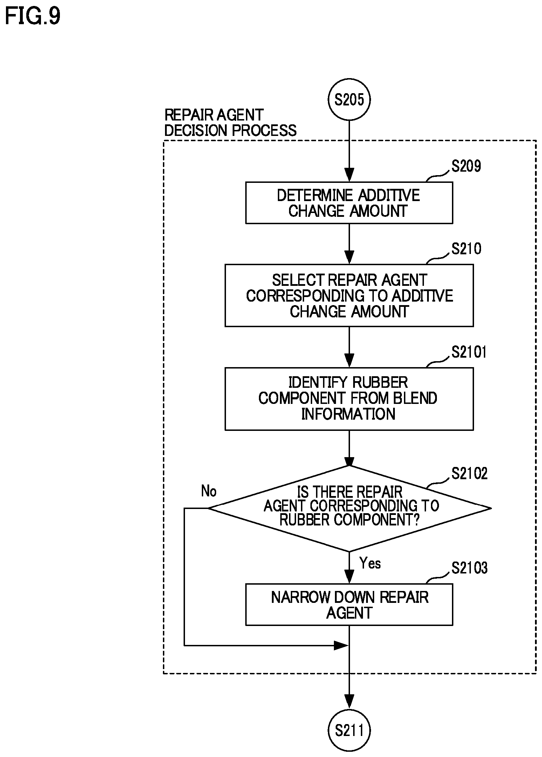

The following describes a second embodiment with reference to FIG. 9. The second embodiment differs from the first embodiment in a part of the repair agent determination process executed in the management apparatus 10. In the following, differences from the first embodiment are described, and description of common configurations is omitted.

FIG. 9 is a flowchart showing another example of the repair agent determination process executed by the control portion 11 of the management apparatus 10. The repair agent determination process of the present embodiment is different from that of the above-described first embodiment in the content of the process for deciding a repair agent for restoring the tire performance of the tire 1. Otherwise, the processes are the same.

As shown in FIG. 9, in the management apparatus 10, after the blend information corresponding to the tire 1 is acquired from the blend data 30B (see FIG. 6) (S205), the control portion 11 performs the repair agent decision process (S209, S210, S2101, S2102, S2103) to decide a repair agent for restoring the tire performance of the tire 1, based on the travel history data received in step S202 and the blend information acquired in step S205. The process of step S205 is performed by the blend information acquiring portion 112. It is noted that step S205 is an example of a second acquisition step. The processes of steps S209, S210, S2101, S2102, and S2103 are performed by the repair agent deciding portion 113. It is noted that steps S209, S210, S2101, S2102, and S2103 are an example of a repair agent decision step.

Specifically, in step S209, the control portion 11 inputs the travel history data and the tire information to the learning model 211 of the determination processing portion 210, thereby causing the learning model 211 to output the additive change amount of the tire 1. The process of step S209 is performed by the determination processing portion 210.

Subsequently, in step S210, the control portion 11 performs a process to select a repair agent for restoring the performance of the tire 1, the repair agent corresponding to the additive change amount. In the present embodiment, in step S210, the control portion 11 selects a plurality of repair agents that respectively correspond to a plurality of additives of highest levels in the additive change amount.

After the repair agents are selected, in the next step S2101, the control portion 11 performs a process to identify the rubber component of the tire 1 mounted on the vehicle 50 by extracting a rubber component included in the acquired blend information.

For example, when the model number of the tire 1 mounted on the vehicle 50 is "A1002", a piece of blend information that corresponds to the model number "A1002" in the blend data 30B is extracted from the blend data 30B. In addition, as the rubber component included in the piece of blend information, 80 phr of SBR (styrene-butadiene rubber) and 20 phr of BR (butadiene rubber) are extracted. This identifies the rubber component of the tire 1.

Upon identifying the rubber component of the tire 1 in step S2101, in the next step S2102, the control portion 11 performs a process to determine whether or not there is a repair agent suitable for the rubber component of the tire 1 in the selected plurality of repair agents. Examples of the repair agent suitable for the rubber component include a repair agent whose SP (solubility parameter) value is approximate to that of the rubber component and which is relatively highly compatible with the rubber component.

For example, in a case where registration data in which a plurality of rubber components and repair agents being respectively suitable for the plurality of rubber components are registered is preliminarily stored in the storage portion 12 of the management apparatus 10 or the database portion 30, the control portion 11 consults the registration data and performs the determination process of step S2102. Specifically, the control portion 11 performs a process to collate the registration data with the rubber component, and extract a repair agent corresponding to the rubber component from the plurality of repair agents included in the registration data. Subsequently, the control portion 11 determines whether or not the extracted repair agent is included in the plurality of repair agents selected in step S210.

Upon determining in step S2102 that the repair agent suitable for the rubber component is included in the plurality of repair agents, the control portion 11, in the next step S2103, performs a process to narrow down the repair agent. Specifically, it selects only the repair agent determined in step S2102 as the repair agent suitable for restoring the tire performance of the tire 1.

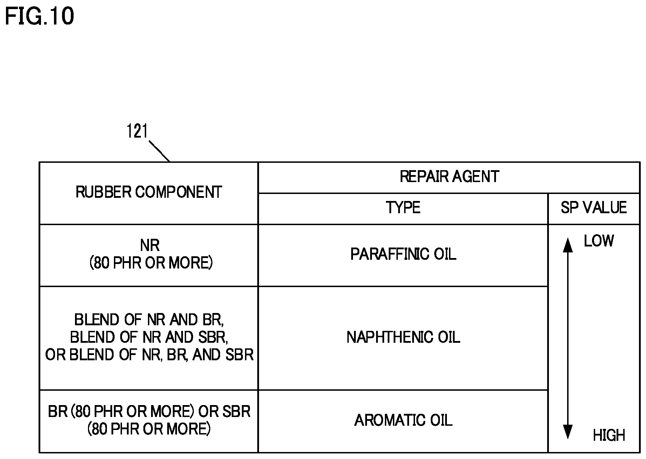

FIG. 10 is table data 121 showing a specific example of the registration data consulted in the determination process of step S2102. As shown in FIG. 10, in the table data 121, in a case where 80 phr or more of the tire component included in the tire 1 is NR (natural rubber), a process oil having a relatively low SP value, specifically the paraffinic oil, is specified as a repair agent corresponding to the rubber component. In addition, in a case where the tire component included in the tire 1 is a blend of NR and BR, a blend of NR and SBR, or a blend of NR, BR, and SBR (in each of these, the blend ratio is less than 80 phr), a process oil having a relatively middle SP value, specifically the naphthenic oil, is specified as a repair agent corresponding to the rubber component. In addition, in a case where 80 phr or more of the tire component included in the tire 1 is BR or SBR, a process oil having a relatively high SP (solubility parameter) value, specifically the aromatic oil, is specified as a repair agent corresponding to the rubber component.

Upon identifying, by consulting the table data 121 as described above, a rubber component containing 80 phr of NR in step S2101, the control portion 11, in the narrowing-down process of step S2103, selects, as the repair agent, the paraffinic oil having a low SP value. In addition, upon identifying a blend rubber that does not contain a single rubber component of 80 phr or more in step S2101, the control portion 11 selects, in the narrowing-down process of step S2103, the naphthenic oil having a middle SP value as the repair agent. In addition, upon identifying a rubber component containing 80 phr or more of BR or SBR in step S2101, the control portion 11 selects, in the narrowing-down process of step S2103, the aromatic oil having a high SP value as the repair agent.

It is noted that when there are a plurality of types of rubber components for the tire 1, in step S2102, the control portion 11 may select a plurality of repair agents that are respectively suitable for the plurality of types, as the repair agents that are optimum for restoring the tire performance.

Upon completing narrowing down the repair agent in step S2103, or upon determining in step S2102 that there is no repair agent corresponding to the rubber component, the control portion 11 performs the process of the next step S211. In step S211, the control portion 11 calculates the repair time to be taken for the repair work using the repair agent narrowed down in step S2103 or the repair agent selected in step S210. Thereafter, the control portion 11 transmits repair agent information including the repair agent and the repair time to the vehicle 50 (S212).

With the above-described repair agent determination process performed in the tire management system 100 according to the second embodiment, a replenishing agent suitable for the rubber component of the tire 1 is selected as an appropriate replenishing agent that is to be replenished to restore the tire performance of the tire 1.

It is noted that although the present embodiment has described a process example in which a plurality of repair agents are selected in step S210, the present disclosure is not limited to this process example. For example, as in the above-described first embodiment, the repair agent selecting portion 220 may select, from the repair agent registration data, a repair agent corresponding to the maximum additive. In this case, when it is determined that the repair agent selected in step S210 is not suitable for the rubber component of the tire 1, the repair agent selecting portion 220 may perform the selection process again to select a repair agent corresponding to an additive in the next order having the next-largest additive change amount, and repetitively perform the narrowing-down process of steps S210, S2101, S2102, and S2103 until it is determined that the selected repair agent is suitable for the rubber component.

[Third embodiment]

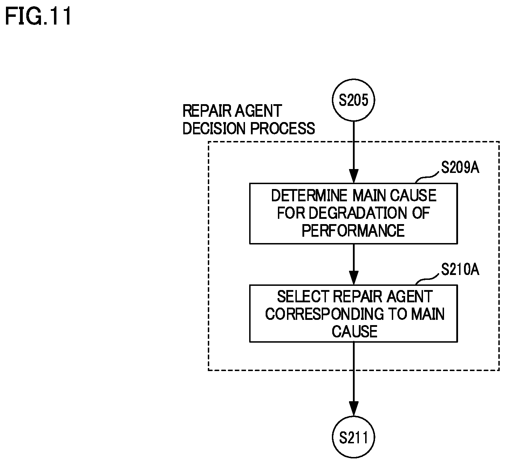

The following describes a third embodiment with reference to FIG. 11. The third embodiment differs from the first embodiment in a part of the repair agent determination process executed in the management apparatus 10. In the following, differences from the first embodiment are described, and description of common configurations is omitted.

FIG. 11 is a flowchart showing another example of the repair agent determination process executed by the control portion 11 of the management apparatus 10. The repair agent determination process of the present embodiment is different from that of the above-described first embodiment in the content of the process for deciding a repair agent for restoring the tire performance of the tire 1. Otherwise, the processes are the same.

Although the first embodiment has described a process example in which the determination processing portion 210 of the repair agent deciding portion 113 determines the additive change amount, the present disclosure is not limited to this process example. In the present embodiment, as shown in FIG. 11, in the management apparatus 10, after the blend information corresponding to the tire 1 is acquired from the blend data 30B (see FIG. 6) (S205), the control portion 11 determines a main cause of degradation of the tire performance of the tire 1 based on the travel history data (S209A), and then performs a process to select a repair agent corresponding to the determined main cause (S210A).

In addition, in the present embodiment, the determination processing portion 210 of the repair agent deciding portion 113 determines the main cause of degradation of the tire performance of the tire 1 based on the travel history data. As the method for the determination, for example, as in the first embodiment, the travel history data may be input to the learning model 211, thereby causing the learning model 211 to output the main cause. In this case, the learning model 211 needs to be learned by the teacher data 30A that includes: input values such as the travel history data of the sample tires and the attribute information (tire information); and one or more main causes (output values) as the answer to these data and information.

In addition, the repair agent selecting portion 220 performs a process to select a repair agent corresponding to the main cause from predetermined repair agent registration data. The repair agent registration data is table data (look-up table) in which information of a plurality of repair agents respectively corresponding to a plurality of causes is registered, and is preliminarily stored in the storage portion 62 of the management apparatus 10 or in the database portion 30. The repair agent selecting portion 220 performs a process to collate the repair agent registration data with the main cause, and extracts, from the plurality of repair agents included in the repair agent registration data, a repair agent corresponding to the main cause.

It is noted that the determination process by the determination processing portion 210 is not limited to the method of determining the main cause by using the learning model 211. For example, the determination processing portion 210 may calculate evaluation values that respectively correspond to a plurality of causes of degradation of the tire performance of the tire 1, compare the calculated evaluation values with each other, and determine, as the main cause, a cause that has the highest evaluation value.

As described above, possible causes of degradation of the tire performance of the tire 1 include: the number of tire rotations, an average speed of the travel speed, the acceleration, the lateral acceleration, the tire air pressure, the tire temperature, the wear amount, the steering angle, the number of times of brake operation, the step amount, the groove depth, the vehicle position, the travel route, and the travel distance. For example, when a value of each of: the number of tire rotations; an average value of the travel speed; the number of times of occurrence of an excessive acceleration exceeding a predetermined threshold (predetermined value); the number of times of occurrences of an excessive lateral acceleration exceeding a predetermined threshold (predetermined value); a duration of an abnormal state of the tire air pressure; a time period for which the tire temperature exceeds a prescribed temperature; the wear amount; the number of times of detection of the steering angle exceeding a predetermined threshold (predetermined angle); the number of times of brake operation; the number of times of occurrence of an excessive step amount (excessive step amount) exceeding a predetermined threshold (predetermined amount); the groove depth, the number of times that the vehicle 50 was placed in inferior environment; a time period for which vehicle 50 travelled on a rough travel road; and the travel distance is denoted by $x_k$, and a weight coefficient assigned to each value $x_k$ is denoted by $t_k$, an evaluation value Sk corresponding to each of the causes is calculated based on the following formula (1).

$$Sk = t_k \cdot x_k \qquad \dots (1)$$

The control portion 11 determines, as the main cause, a cause that corresponds to, among a plurality of evaluation values Sk corresponding to the causes, an evaluation value having the largest value.

The formula for calculating the evaluation value Sk and the coefficients $t_k$ are stored in the storage portion 12 of the management apparatus 10. The determination processing portion 210 can determine, as the main cause, a cause having the largest evaluation value Sk by calculating the evaluation values Sk using the formula, values $x_k$ obtained from the travel history data, and the coefficients $t_k$, and comparing the evaluation values Sk with each other.

It is noted that the control portion 11 may perform a process to select two or more evaluation values Sk from a plurality of evaluation values Sk based on a predetermined selection rule, take an arithmetic mean or a geometric mean of the selected two or more evaluation values Sk (selected evaluation values Sk), and perform a process to determine the main cause by using the arithmetic mean or the geometric mean. As the selection rule, for example, two or more selected evaluation values Sk corresponding to, among the causes, causes that are highly related to each other may be selected. For example, it is considered that causes concerning the travel of the vehicle 50 (the number of tire rotations, the average speed of the travel speed, the acceleration, the lateral acceleration and the like) are highly related to each other, causes concerning the operation of the vehicle 50 (the steering angle, the number of times of brake operation, the brake step amount and the like) are highly related to each other, causes concerning the wear of the tire 1 (the wear amount, the groove depth and the like) are highly related to each other, and causes concerning the travel record (the vehicle position, the travel route, the travel distance and the like) are highly related to each other.

With the above-described repair agent determination process performed in the tire management system 100 according to the third embodiment, as an appropriate replenishing agent that is to be replenished to restore the tire performance of the tire 1, a replenishing agent that corresponds to the main cause of degradation of the rubber performance of the tire 1 and is suitable for restoring the degraded rubber performance is selected.

[Fourth embodiment]

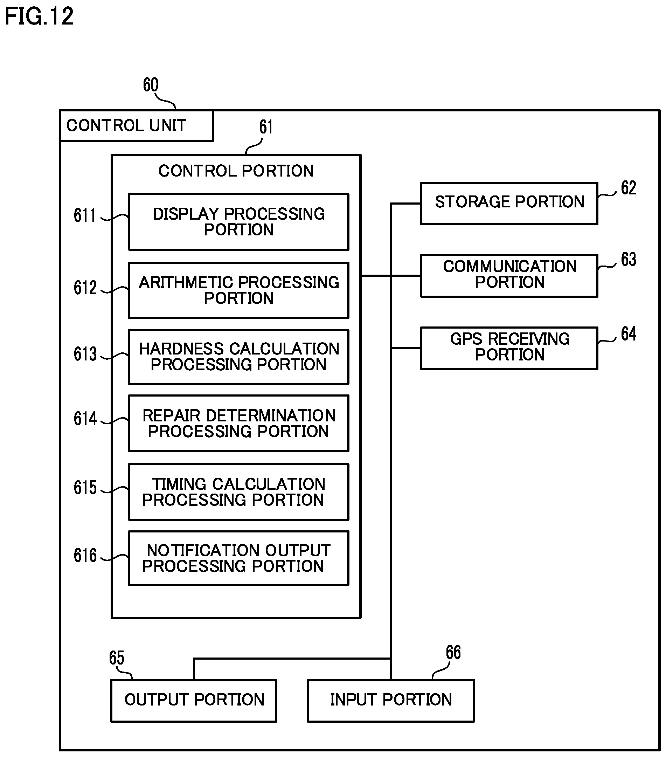

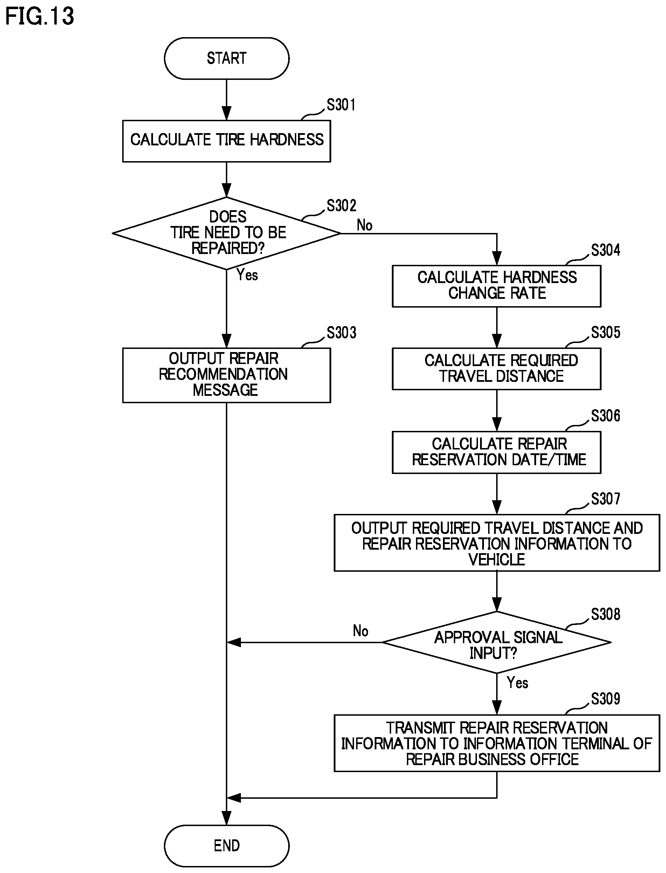

The following describes a fourth embodiment with reference to FIG. 12 and FIG. 13. Here, FIG. 12 is a diagram showing a configuration of the control unit 60 according to the fourth embodiment, and FIG. 13 is a flowchart showing an example of the procedure of a notification output process executed by the control portion 61 of the control unit 60. It is noted that in the following, differences from the above-described embodiments are described, and description of common configurations is omitted.

As shown in FIG. 12, the control portion 61 of the control unit 60 includes the above-described display processing portion 611, arithmetic processing portion 612, and hardness calculation processing portion 613, as well as various processing portions such as a repair determination processing portion 614 (an example of a second determination processing portion), a timing calculation processing portion 615 (an example of a timing calculation processing portion), and a notification output processing portion 616. It is noted that the notification output processing portion 616 is an example of a second output processing portion, a third output processing portion, and a fifth output processing portion.

As described above, the hardness calculation processing portion 613 performs a process to calculate the hardness (tire hardness) of the tread portion of the tire 1. For example, the hardness calculation processing portion 613 calculates the tire hardness of the tread portion of the current tire 1 based on the wear amount of the tread portion (an example of the cause history information) calculated by the arithmetic processing portion 612.

The tire hardness is an index indicating the difficulty of being deformed when a force is applied to the tire 1, and the higher the tire hardness is, the more difficult to be bent the tire 1 is. The braking performance and the grip performance of the tire 1 are related to the hardness of the tire 1, and the higher the tire hardness is, the more degraded the braking performance and the grip performance of the tire 1 are. For this reason, the tire hardness of the tire 1 being currently mounted and used can be regarded as a performance value (current performance value) that indicates the level of the performance of the tire 1.

The repair determination processing portion 614 performs a process to calculate a timing when the tire performance of the tire 1 exceeds a predetermined performance allowable range of the tire 1. The repair determination processing portion 614 determines whether or not the tire 1 needs to be repaired based on the tire hardness calculated by the hardness calculation processing portion 613. Specifically, the repair determination processing portion 614 determines whether or not the tire 1 needs to be repaired based on a difference (hardness difference) between the tire hardness and a predetermined standard hardness. The standard hardness is the hardness of the tread portion of the tire 1 in an unused state or after a repair, is preliminarily measured by a hardness meter conforming to the Japan Industrial Standards (JIS K6253), and is stored, as a part of the tire information, in the memory 67 of the tire 1.

When the hardness difference exceeds the predetermined allowable range, the repair determination processing portion 614 determines that the tire 1 needs to be repaired. In addition, when the hardness difference is within the allowable range, the repair determination processing portion 614 determines that the tire 1 does not need to be repaired.

It is noted that the repair determination processing portion 614 may determine that the tire 1 needs to be repaired when the tire hardness is equal to or higher than an upper-limit value of an allowable range that is defined for each tire 1, and may determine that the tire 1 does not need to be repaired when the tire hardness is within the allowable range.

The timing calculation processing portion 615 performs a process to calculate a timing when the tire performance exceeds a predetermined allowable range, based on the current tire hardness calculated by the hardness calculation processing portion 613. Specifically, upon a determination of the repair determination processing portion 614 that the tire 1 does not need to be repaired, the timing calculation processing portion 615 calculates the timing.

In the present embodiment, the timing calculation processing portion 615 calculates, as an example of the timing, a required travel distance that is required until the tire hardness exceeds the predetermined allowable range. Specifically, it obtains a hardness change rate (hardness change per unit distance) of the tire hardness from the travel distance travelled to the current point in time included in the travel history data and the hardness difference of the tire hardness, and calculates the required travel distance that is required until the tire hardness exceeds the upper-limit value by dividing a difference value between the upper-limit value of the allowable range and the tire hardness by the hardness change rate.

It is noted that the timing calculation processing portion 615 may calculate a required time that is required until the tire hardness exceeds the predetermined allowable range, or an estimated date/time when the tire hardness will exceed the allowable range.

The notification output processing portion 616 performs a process to output results of various processes executed by the control portion 61 and a notification. Specifically, when the repair determination processing portion 614 has determined that the tire 1 needs to be repaired, it outputs a repair recommendation message (an example of restoration information) to a predetermined output destination, wherein the repair recommendation message urges to repair the tire 1. The output destination is, for example, the display device 502 installed in the vehicle 50, the information terminal 71 carried by the user, or the information terminal 72 installed in a repair business office where a repair work for restoring the performance of the tire 1 is performed.

In addition, the notification output processing portion 616 outputs the required travel distance calculated by the timing calculation processing portion 615 to a predetermined output destination (the display device 502, the information terminal 71, the information terminal 72).

In addition, the notification output processing portion 616 performs a process to output, to the information terminal 72 installed in the repair business office, repair reservation information corresponding to the required travel distance calculated by the timing calculation processing portion 615. Here, the repair reservation information is reservation information including a repair reservation date/time calculated by the control portion 61 based on the required travel distance, and is information required for reserving a repair of the tire 1. The repair reservation information also includes: user information including a name or a contact destination of a user who is the owner of the vehicle 50; the tire information including the model number of the tire 1 and the like; and information indicating the repair business office that is the reservation destination.

The output destination to which the repair reservation information is output is the information terminal 72 that corresponds to the repair business office preliminarily registered in the storage portion 62 of the control unit 60, and its transmission destination information (for example, an electronic mail address) is stored in the storage portion 62. It is noted that the output destination of the repair reservation information may be, for example, the information terminal 72 of a repair business office located nearest to the position of the vehicle 50. In this case, a repair business office list in which names and addresses of a plurality of repair business offices and the transmission destination information are registered, is stored in the storage portion 62, and the control portion 61 extracts a repair business office located nearest to the position of the vehicle 50 by consulting position information obtained from the GPS receiving portion 64 and the addresses in the repair business office list, and transmits the repair reservation information to the transmission destination information of the repair business office.

The control portion 61 calculates, from the required travel distance, the estimated date/time when the tire hardness will exceed the predetermined allowable range, and obtains the repair reservation date/time by multiplying the estimated date/time by a predetermined correction coefficient.

It is noted that the repair reservation information may be output to the display device 502 or the information terminal 71. In this case, it is preferable that when the repair reservation information is displayed on the display screen of the display device 502 or the information terminal 71, and the user performs an operation to input, from the display device 502 or the information terminal 71, an approval signal that indicates an approval for the repair reservation date/time and the repair business office being the reservation destination included in the repair reservation information, the notification output processing portion 616 transmits the repair reservation information to the information terminal 72.

[Notification output process]

In the following, with reference to the flowchart of FIG. 13, a description is given of an example of the procedure of the notification output process executed in the vehicle 50, as well as a method (an example of the tire management method) for outputting the repair recommendation message, the required travel distance or the like to a predetermined output destination.

It is noted that one or more steps included in the flowchart of FIG. 13 may be omitted as necessary, and the steps may be executed in different orders as far as the same action and effect are caused.

First, in step S301, the control portion 61 calculates hardness (tire hardness) of the tire 1. The process of step S301 is the same as the process of the above-described step S101, and is executed by the hardness calculation processing portion 613 of the control portion 61.

After the tire hardness is calculated in step S301, in step S302, the control portion 61 performs a process to determine whether or not the tire 1 needs to be repaired. The process of step S302 is executed by the repair determination processing portion 614 of the control portion 61. It is noted that step S302 is an example of a second determination step.

Upon a determination in step S302 that the tire 1 needs to be repaired (Yes in S302), the control portion 61 outputs the repair recommendation message to the predetermined output destination (the display device 502, the information terminal 71, the information terminal 72) (S303). The process of step S303 is executed by the notification output processing portion 616 of the control portion 61. It is noted that step S303 is an example of a fifth output step.

On the other hand, upon a determination in step S302 that the tire 1 does not need to be repaired (No in S302), the control portion 61 calculates the hardness change rate (S304), and then calculates the required travel distance (S305). The processes of steps S304 and S305 are executed by the timing calculation processing portion 615 of the control portion 61.

In the next step S306, the control portion 61 calculates the repair reservation date/time based on the required travel distance. Thereafter, the control portion 61 transmits the required travel distance and the repair reservation information including the repair reservation date/time to the predetermined output destination (S307). The process of step S307 is executed by the notification output processing portion 616 of the control portion 61. In step S307, the control portion 61 transmits the repair reservation information to the display device 502 of the vehicle 50 or the information terminal 71 of the user.

In the next step S308, the control portion 61 determines whether or not the approval signal has been input. For example, the user checks the repair reservation information on the display screen of the display device 502 or the information terminal 71, and when he/she approves its content, the user performs an operation to transmit the approval signal to the control unit 60 via the display device 502 or the information terminal 71. Upon, with this operation, an input of the approval signal to the control unit 60, the control portion 61, in the next step S309, performs a process to transmit the repair reservation information to the information terminal 72 installed in the repair business office. On the other hand, upon an input of a cancel signal instead of the approval signal, the series of processes end without the repair reservation information being transmitted to the information terminal 72. It is noted that the process of step S309 is executed by the notification output processing portion 616 of the control portion 61.

As described above, in the fourth embodiment, the repair recommendation message is transmitted to the predetermined output destination. This makes it possible for the user who has received the message from the display device 502 or the information terminal 71 to recognize that a timing to repair the tire 1 has come. In addition, this makes it possible for a repair worker of the repair business office that has received the repair recommendation message to recognize that the repair recommendation message has been notified to the user.

In addition, the required travel distance, indicating a travel distance required until the tire performance of the tire 1 exceeds the allowable range, is transmitted to a predetermined output destination. This makes it possible for the user who has received this to estimate a timing to repair the tire 1. In addition, this makes it possible for the repair worker who has received the information of the required travel distance from the information terminal 72 to estimate a timing when the vehicle 50 will be carried into the repair business office for the tire 1 to be repaired.

In addition, with a configuration where the repair reservation information is transmitted to the information terminal 72, it is possible for the repair worker of the repair business office to grasp an accurate timing when the vehicle 50 will be carried into the repair business office for the tire 1 to be repaired.

[Fifth embodiment]

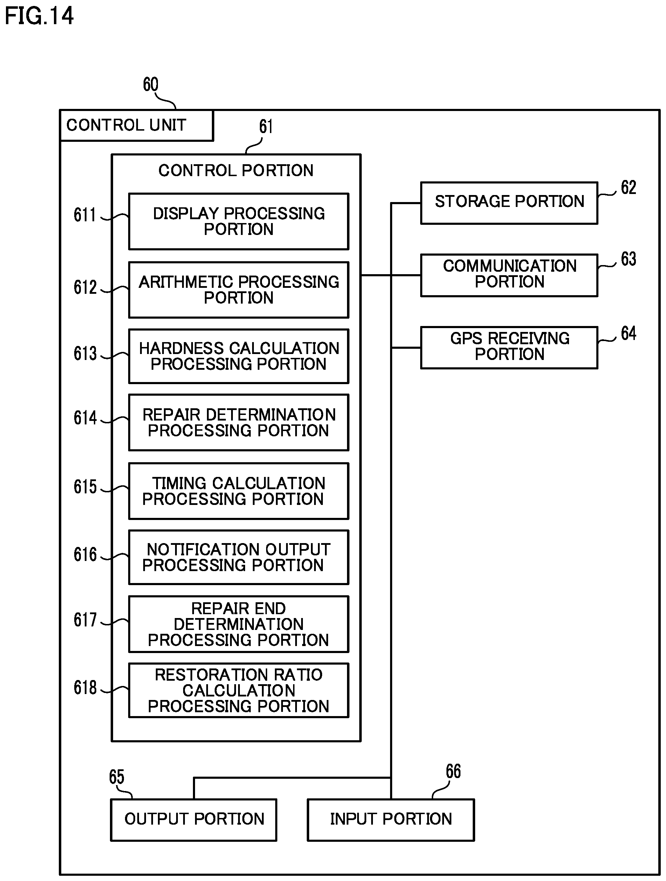

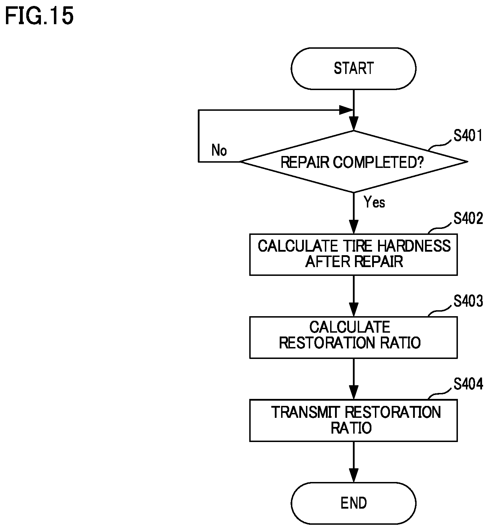

The following describes a fifth embodiment with reference to FIG. 14 and FIG. 15. Here, FIG. 14 is a diagram showing a configuration of the control unit 60 according to the fifth embodiment, and FIG. 15 is a flowchart showing an example of the procedure of a restoration ratio output process executed by the control portion 61 of the control unit 60. It is noted that in the following, differences from the above-described embodiments are described, and description of common configurations is omitted.

As shown in FIG. 14, the control portion 61 of the control unit 60 includes the above-described processing portions, as well as a repair end determination processing portion 617 (an example of a first determination processing portion), and a restoration ratio calculation processing portion 618. It is noted that in the fifth embodiment, the restoration ratio calculation processing portion 618 and the notification output processing portion 616 are an example of a fourth output processing portion.

The repair end determination processing portion 617 determines whether or not a repair for restoring the tire performance of the tire 1 has been performed. When a repair work is performed in a repair business office, the repair worker writes repair history information into the memory 67 of the tire 1, wherein the repair history information includes a fact of a repair, a repair date/time, the number of times of repair, and information of a repair agent used in the repair. When the tire 1 after repair is mounted on the vehicle 50 and the key switch is turned on, the control portion 61 determines whether or not the repair history information is stored in the memory 67, and upon determining that the repair history information is stored in the memory 67, reads the repair history information from the memory 67 together with other information such as the tire information and store them in the storage portion 62 of the control unit 60. The repair end determination processing portion 617 can determine whether or not the tire 1 has been repaired by consulting the repair history information.

It is noted that the repair end determination processing portion 617 executes the determination process only once immediately after the repair is performed. For example, after the determination process is executed, identification information indicating that the determination process was executed may be added to the repair history information. Thereafter, the determination process may be executed only when the identification information is not included in the repair history information. Accordingly, the repair end determination processing portion 617 performs the determination process each time the repair history information that does not include the identification information is stored in the memory 67.

Upon a determination that the tire 1 has been repaired, the restoration ratio calculation processing portion 618 causes the hardness calculation processing portion 613 to calculate a tire hardness (hereinafter referred to as "after-repair hardness") of the tread portion of the tire 1 whose tire performance has been restored by a repair. The after-repair hardness is an index indicating the level of the tire performance of the repaired tire 1, and is an example of an after-restoration performance value. In addition, the restoration ratio calculation processing portion 618 calculates, by using the calculated after-repair hardness and the standard hardness (an example of the initial performance value), a ratio (hereinafter referred to as "restoration ratio") of the after-repair hardness to the standard hardness.

The notification output processing portion 616 performs a process to, when the after-repair hardness of the tire 1 is calculated immediately after the repair, output the after-repair hardness to a predetermined output destination. In addition, the notification output processing portion 616 performs a process to, when the restoration ratio is calculated by the restoration ratio calculation processing portion 618, output the restoration ratio to a predetermined output destination. The predetermined output destination is, for example, the display device 502 installed in the vehicle 50, the information terminal 71 carried by the user, or the information terminal 72 installed in a repair business office where a repair work for restoring the performance of the tire 1 is performed.

[Restoration ratio output process]

In the following, with reference to the flowchart of FIG. 15, a description is given of an example of the procedure of the restoration ratio output process executed in the vehicle 50, as well as a method (an example of the tire management method) for outputting the restoration ratio and the like to a predetermined output destination.

It is noted that one or more steps included in the flowchart of FIG. 15 may be omitted as necessary, and the steps may be executed in different orders as far as the same action and effect are caused.

First, in step S401, the control portion 61 determines whether or not a repair for restoring the tire performance of the tire 1 has been performed. The determination process is executed by the repair end determination processing portion 617. Upon a determination in step S401 that the repair has been performed, in the next step S402, the control portion 61 calculates the hardness (tire hardness) of the tire 1 after repair. The process of step S402 is the same as the process of the above-described step S101 or step S301, and is executed by the hardness calculation processing portion 613 of the control portion 61.

After the hardness of the tire 1 after repair is calculated, the control portion 61, in step S403, calculates the restoration ratio that is a ratio of the after-repair hardness to the standard hardness. This process is executed by the restoration ratio calculation processing portion 618.

Subsequently, the control portion 61 performs a process to transmit the restoration ratio to the display device 502, the information terminal 71, or the information terminal 72. At this time, the control portion 61 transmits the tire hardness of the tire 1 after repair, together with the restoration ratio. This process is executed by the notification output processing portion 616.

As described above, in the fifth embodiment, the restoration ratio and the after-repair hardness are transmitted to the predetermined output destination. This makes it possible for the user to receive information of the restoration ratio and the after-repair hardness on the display device 502 or the information terminal 71. In addition, the user who has received these types of information can recognize the tire hardness of the tire 1 after repair, and recognize the extent to which the tire 1 has been restored by the repair. In addition, this makes it possible for the repair worker of the repair business office to receive information of the restoration ratio and the after-repair hardness on the information terminal 72 and recognize the restorative effect of the repair agent used in the repair.

It is noted that although the present embodiment has described a process example in which the restoration ratio is calculated and transmitted to a predetermined transmission destination, the present disclosure is not limited to this. For example, the restoration ratio may not be calculated, and only the after-repair hardness may be transmitted to the predetermined transmission destination.

[Sixth embodiment]

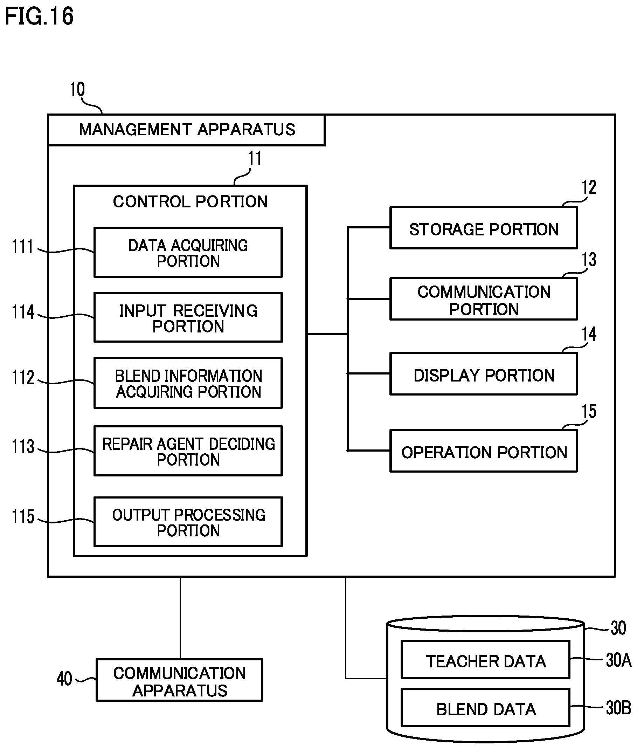

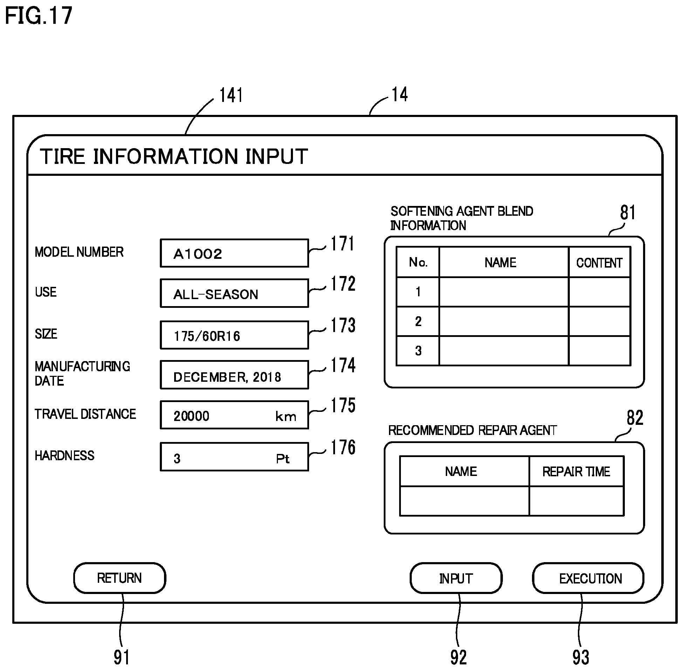

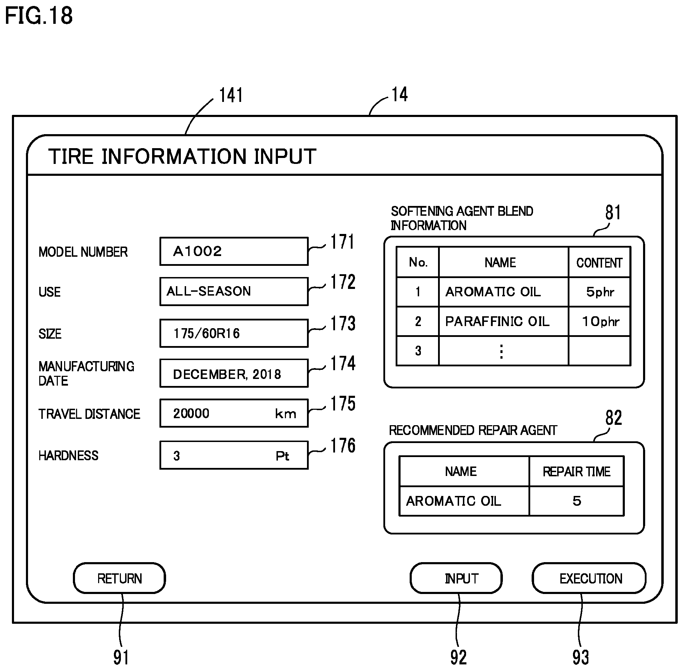

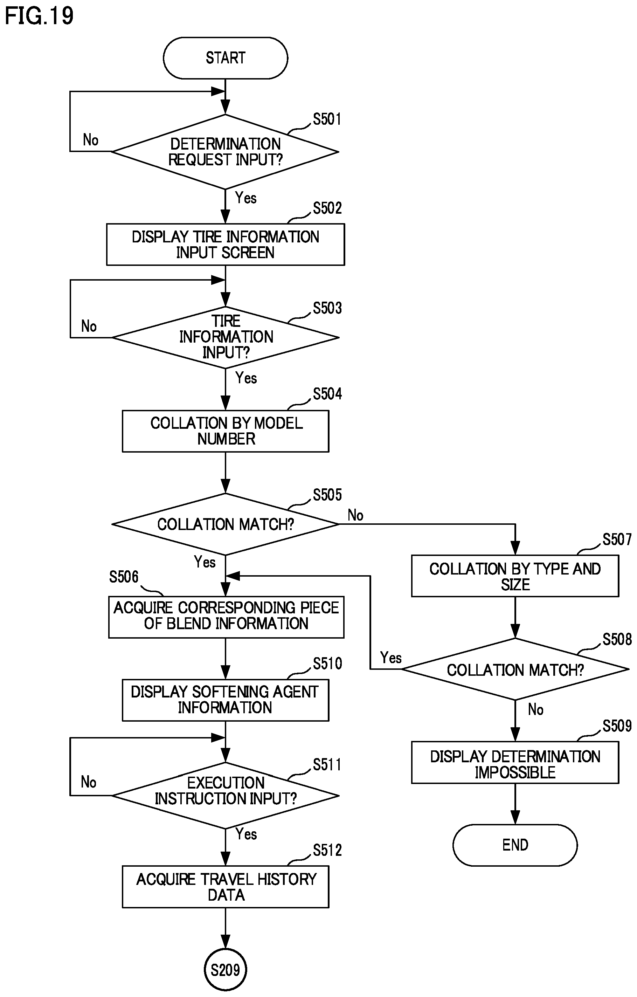

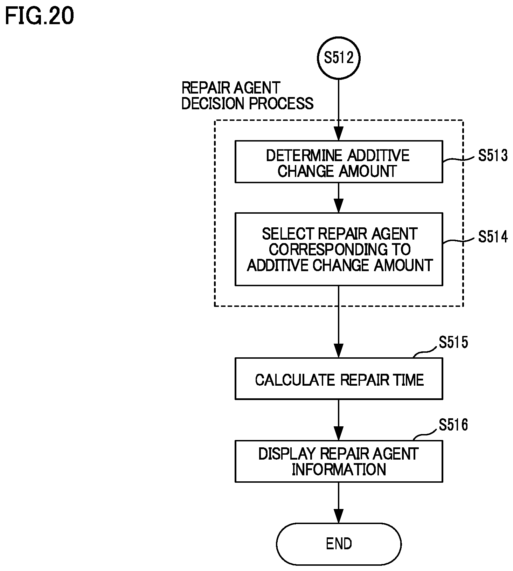

The following describes a sixth embodiment with reference to FIG. 16 to FIG. 19. Here, FIG. 16 is a block diagram showing a configuration of the management apparatus 10 according to the sixth embodiment. FIG. 17 and FIG. 18 are diagrams showing a tire information input screen 141 displayed on a display screen of the display portion 14 of the management apparatus 10. FIG. 19 and FIG. 20 are flowcharts showing another example of the repair agent determination process executed by the control portion 11 of the management apparatus 10. It is noted that in the following, differences from the above-described embodiments are described, and description of common configurations is omitted.

Different from the above-described embodiments, the management apparatus 10 is installed in a repair business office where a repair work of the tire 1 using a repair agent is performed. The management apparatus 10 is an information processing apparatus or a server apparatus that executes various types of arithmetic processing.

In the present embodiment, the management apparatus 10 performs a process to perform a data communication with the vehicle 50 that has been carried into the repair business office, acquire, from the vehicle 50, the tire information and the travel history data of the vehicle 50, and determine, based on these pieces of information, a repair agent suitable for the tire 1. In addition, when the tire 1 dismounted from the vehicle 50 has been carried into the repair business office by the owner, the management apparatus 10 performs a process to determine a repair agent suitable for the tire 1 based on information of the model number of the tire 1, information of the travel history data acquired from the tire 1, and the like.

[Management apparatus 10]

The following describes a configuration of the management apparatus 10 with reference to FIG. 16.

The management apparatus 10 is provided to realize the above-described tire management system 100, and is configured to determine a repair agent suitable for restoring the tire performance of the tire 1 being mounted on the vehicle 50 and in use, or the tire 1 dismounted from the vehicle 50.

The display portion 14 included in the management apparatus 10 is a display device for displaying various types of information, such as a liquid crystal display, an organic EL display, or a touch panel enabling direct touch inputs to the screen. In the present embodiment, the tire information input screen 141 (see FIG. 17 and FIG. 18) described below is displayed on the display screen of the display portion 14.

As shown in FIG. 16, the control portion 11 of the management apparatus 10 includes various types of processing portions such as: the data acquiring portion 111 (an example of the first acquisition processing portion); the blend information acquiring portion 112 (an example of the second acquisition processing portion); the repair agent deciding portion 113 (an example of the material decision processing portion); and the output processing portion 115 (an example of the first output processing portion), as well as an input receiving portion 114. It is noted that since the processing portions other than the input receiving portion 114 have the same configuration as those of the first embodiment and other embodiments, description thereof is omitted here.

The input receiving portion 114 performs a process to receive a part or all of the tire information concerning the tire 1. Specifically, the input receiving portion 114 displays, at a predetermined timing, the tire information input screen 141 (see FIG.17) on the display portion 14. Subsequently, after the tire information is input into the tire information input screen 141 by the operation portion 15, and further an input key 92 (see FIG.17) is selected and operated, the input receiving portion 114 acquires information input into input fields 171 to 176 of the tire information input screen 141.

In addition, when the input key 92 is selected and operated, the input receiving portion 114 receives an input signal that is input by the operation, as a trigger signal for starting a process for acquiring the blend information performed by the blend information acquiring portion 112. Accordingly, when the input signal is input, the blend information acquiring portion 112 performs a process to acquire, from the blend data 30B (see FIG. 6), the blend information including types of materials constituting the tire 1, blend ratios of the materials and the like. It is noted that a part or all of the blend information acquired by the blend information acquiring portion 112 is displayed in a display field 81 in the tire information input screen 141.

In the present embodiment, when the tire information has been input via the tire information input screen 141, the blend information acquiring portion 112 collates the model number included in the tire information with the blend data 30B to extract, from the blend data 30B, a piece of blend information corresponding to the model number. That is, the blend information acquiring portion 112 extracts, from the blend data 30B, a piece of blend information that matches the model number included in the tire information input to the management apparatus 10.

In addition, when a piece of blend information corresponding to a model number input into the input field 171 is not found in the blend data 30B, the blend information acquiring portion 112 determines whether or not a use and a size input into the input fields 172 and 173 are equivalent to use information and size information in the blend data 30B. Upon determining that are equivalent, the blend information acquiring portion 112 recognizes, as the blend information of the tire 1, a piece of blend information corresponding to a piece of use information and a piece of size information determined as equivalent to the use and the size, and performs a process to extract the blend information from the blend data 30B.

In addition, when an execution key 93 is selected and operated, the input receiving portion 114 receives an execution signal that is input by the operation, as a trigger signal for starting the repair agent decision process performed by the repair agent deciding portion 113. Accordingly, when the execution signal is input, the repair agent deciding portion 113 performs a process to, based on the travel history data acquired by the data acquiring portion 111 and the like, decide a repair agent (an example of the restoration material) for restoring the tire performance of the tire 1 that has been degraded due to use. It is noted that when a repair agent suitable for the tire 1 is decided by the repair agent decision process, information of the repair agent and a repair time (required time) to be taken for a repair using the repair agent are displayed in a display field 82 in the tire information input screen 141.

FIG. 17 and FIG. 18 are diagrams showing the tire information input screen 141 (an example of an input screen) displayed on the display portion 14. FIG. 17 shows a state where the tire information is displayed in the input fields 171 to 176, and the display fields 81 and 82 are empty. FIG. 18 shows a state where information is displayed in the input fields 171 to 176 and the display fields 81 and 82.

As shown in FIG. 17, the tire information input screen 141 includes: a plurality of input fields 171 to 176 for inputting and displaying the tire information; the display field 81 for displaying the blend information of the tire 1; and the display field 82 for displaying a repair agent suitable for the tire 1. In addition, the tire information input screen 141 includes: a return key 91 for returning the display content to a previous state; an input key 92 for executing the process to acquire the blend information of the tire 1; and an execution key 93 for executing the repair agent decision process.

In the present embodiment, a partial piece of the blend information, specifically information (softening agent blend information) concerning a softening agent that is an additive of the tire 1, is displayed in the display field 81. The softening agent blend information includes the name and the blend ratio of the softening agent. Of course, all of the blend information of the tire 1 may be displayed in the display field 81.

The tire information of the tire 1 is input into each of the input fields 171 to 176 as the user operates the operation portion 15. In the present embodiment, as one example, the model number of the tire 1 is input into the input field 171, the use of the tire 1 is input into the input field 172, the size of the tire 1 is input into the input field 173, the manufacturing date of the tire 1 is input into the input field 174, the travel distance of the tire 1 is input into the input field 175, and the hardness of the tire 1 is input into the input field 176.

In addition, when the user has selected the input key 92 by operating the operation portion 15, the input signal is output to the control portion 11. Upon receiving the input signal, the blend information acquiring portion 112 of the control portion 11 performs a process to acquire, from the blend data 30B (see FIG. 6), the blend information including types of materials constituting the tire 1, blend ratios of the materials and the like. Subsequently, among the blend information acquired by the process, the name of a softening agent blended in the tire 1 and its blend ratio (softening agent blend ratio) are displayed in the display field 81 as the softening agent blend information.

In addition, when the user has selected the execution key 93 by operating the operation portion 15, the execution signal is output to the control portion 11. Upon receiving the execution signal, the repair agent deciding portion 113 of the control portion 11 performs a process to decide a repair agent suitable for the tire 1.

[Repair agent determination process]

In the following, with reference to flowcharts of FIG. 19 and FIG. 20, a description is given of an example of the procedure of the repair agent determination process executed in the tire management system 100, as well as a repair agent determination method (an example of the tire management method) for determining a repair agent. Here, in the present embodiment, the repair agent determination process is performed with respect to the tire 1 of the vehicle 50 that has been carried into the repair business office by the driver, or the tire 1 that has been dismounted from the vehicle 50 and carried into the repair business office by the owner.

It is noted that each process of the flowcharts shown in FIG. 19 and FIG. 20 is executed by the control portion 11 of the management apparatus 10. In addition, one or more steps included in the flowcharts of FIG. 19 and FIG. 20 may be omitted as necessary, and the steps may be executed in different orders as far as the same action and effect are caused.

As shown in FIG. 19, in step S501, the control portion 11 determines whether or not a determination request has been input to the management apparatus 10. The determination request is input to the management apparatus 10 when, for example, the repair worker of the repair business office operates the management apparatus 10 and inputs an execution key (not shown).

It is noted that when the vehicle 50 has been carried into the repair business office, in step S501, the control portion 11 may perform the same determination process as in step S201 described above, namely, a process to determine whether or not the determination request transmitted from the control unit 60 of the vehicle 50 has been received.

Upon a determination in step S501 that the determination request has been input, in the next step S502, the control portion 11 performs a process to display the tire information input screen 141 (see FIG. 17) on the display screen of the display portion 14.

Next, the control portion 11 performs a process to determine whether or not the tire information has been input into the tire information input screen 141 (S503). For example, the repair worker confirms, by visual observation, the various types of information written on the sidewall of the tire 1 mounted on the vehicle 50, and inputs information of the model number, use, size, and manufacturing date obtained from the information into the corresponding input fields 171 to 174. In addition, the repair worker confirms, by visual observation, the travel distance from the measuring instrument unit 501 or an on-vehicle device of the vehicle 50, and inputs the travel distance into the corresponding input field 175. In addition, the repair worker measures the hardness of the tread portion of the tire 1 by using a well-known tire hardness meter, and inputs its measured value into the corresponding input field 176.

When the information is input into all of the input fields 171 to 176, and then the input key 92 is selected and operated by the repair worker, the control portion 11 receives the input signal transmitted by the selection operation, and stores the tire information that has been input into the input fields 171 to 176, into the storage portion 62.

It is noted that when the vehicle 50 has been carried into the repair business office, in step S503, the control portion 11 may receive the tire information, the travel distance, and the tire hardness transmitted from the control unit 60 of the vehicle 50, and display these pieces of information in the corresponding input fields 171 to 176.

In addition, upon an input of the tire information, the control portion 11 performs, in step S504, a collation process based on the model number included in the tire information. Subsequently, when, in the next step S505, it is determined that there is a matching model number in the blend data 30B (Yes in S505), the control portion 11 performs a process to acquire a piece of blend information corresponding to the model number from the blend data 30B (S506). The process of step S506 to acquire the piece of blend information is executed by the blend information acquiring portion 112. It is noted that the processes of steps S504, S505, and S506 are similar to those of the above-described steps S203, S204, and S205 (see FIG. 8), and detailed description thereof is omitted.

On the other hand, when it is determined that there is no matching model number in the blend data 30B (No in S505), the control portion 11 performs a collation process based on the use and the size included in the tire information (S507). It is noted that when information of the model number has not been input into the input field 171, the processes of steps S504 and S505 may be omitted. It is noted that the process of steps S507 is similar to that of the above-described step S206 (see FIG. 8), and detailed description thereof is omitted.

When, in the next step S508, it is determined that there are matching use and size in the blend data 30B (Yes in S508), the control portion 11, in the next step S506, performs a process to acquire a piece of blend information corresponding to the use and size from the blend data 30B. It is noted that the process of step S508 is similar to that of the above-described step S207 (see FIG. 8), and detailed description thereof is omitted.

When, in step S508, it is determined that there are no matching use and size in the blend data 30B (No in S508), it performs a process to display determination impossible information on the display portion 14 (S509), wherein the determination impossible information indicates that a repair agent cannot be determined. Specifically, it displays, superimposed on the tire information input screen 141, an error message that includes the determination impossible information, or displays an error display screen including the determination impossible information, on the display portion 14. Thereafter, the series of processes end.

After the blend information is acquired in step S506, the control portion 11 performs a process to display, in the display field 81, the softening agent blend information that includes the name of a softening agent and its blend ratio included in the blend information (S510).

Subsequently, upon an input of the execution instruction (Yes in S511), the control portion 11 performs, in step S512, a process to acquire the travel history data of the vehicle 50. For example, the control portion 11 outputs a request signal of requesting the travel history data to the control unit 60 of the vehicle 50. In response to this request signal, the control portion 61 of the control unit 60 reads the travel history data in the storage portion 62, and transmits the travel history data to the management apparatus 10. Subsequently, the control portion 11 receives the travel history data transmitted from the vehicle 50.

It is noted that when the tire 1 dismounted from the vehicle 50 has been carried into the repair business office, the control portion 11 may acquire the travel history data by accessing the memory 67 of the tire 1 by a wireless communication, and reading the travel history data stored in the memory 67.

After the travel history data is acquired, the control portion 11, as shown in FIG. 20, performs the repair agent decision process (S513, S514) to decide a repair agent for restoring the tire performance of the tire 1. The process is performed by the repair agent deciding portion 113. It is noted that the processes of steps S513 and S514 are similar to those of the above-described steps S209 and S210 (see FIG. 8), and detailed description thereof is omitted. Steps S513 and S514 are an example of the repair agent decision step.

After the repair agent to be used in the repair of the tire 1 is decided, the control portion 11 calculates the repair time to be taken for the repair work using the repair agent (S515).

After the repair time is calculated, the control portion 11, in the next step S516, performs a process to display the repair agent information including the repair agent and the repair time on the display portion 14. Specifically, as shown in FIG. 18, it displays the repair agent information in the display field 82. It performs a process to transmit to the vehicle 50. The process of step S516 is performed by the output processing portion 115. It is noted that when the price information and the repair effect are included in the repair agent information, it may display these pieces of information on the display portion 14, too. Thereafter, the series of processes end.

With the above-described configuration of the tire management system 100 according to the sixth embodiment, an appropriate replenishing agent that is to be replenished to restore the tire performance of the tire 1 is selected by the management apparatus 10 even when the vehicle 50 is carried into the repair business office, or even when only the tire 1 is carried thereinto. This makes it possible for the repair worker who performs the repair work at the repair business office to identify, securely and easily, an optimum repair agent to be applied to the tire 1.

It is noted that although the above-described embodiment has described a configuration example in which the data acquiring portion 111, the input receiving portion 114, the blend information acquiring portion 112, the repair agent deciding portion 113, and the output processing portion 115 are realized by the control portion 11 of the management apparatus 10, all or a part of these processing portions may be realized by one or more of: the control portion 61 of the control unit 60; a control portion (processor) in an on-vehicle device installed in the vehicle 50; and the control portion 11 of the management apparatus 10. Of course, the tire management system 100 may be realized by only the management apparatus 10, the on-vehicle device, or the control unit 60.

**Claims**

1.  A tire management system (100) comprising:

    a first acquisition processing portion (111) configured to acquire cause history information concerning a cause of degradation of performance of a tire (1) mounted on a vehicle (50);
    **characterized in that**
    the tire management system (100) further comprises:

    a second acquisition processing portion (112) configured to acquire material information concerning one or more materials constituting the tire (1); and
    a material decision processing portion (113) configured to decide a restoration material for restoring the performance that has been degraded, based on the cause history information acquired by the first acquisition processing portion (111) and the material information acquired by the second acquisition processing portion (112).

2.  The tire management system (100) according to claim 1, wherein
    the material decision processing portion (113) includes:

    a determination portion (210) configured to perform a process to determine a deteriorated content of the tire based on the cause history information; and
    a selection portion (220) configured to perform a process to select, from a predetermined storage portion storing the deteriorated content and the restoration material in correspondence with each other, the restoration material that corresponds to a material included in the material information and corresponds to the deteriorated content determined in a determination process performed by the determination portion (210).

3.  The tire management system (100) according to claim 1, wherein

    the cause history information includes history of a plurality of causes, and
    the material decision processing portion (113) decides a main cause of degradation of the performance based on the cause history information, and selects, from a predetermined storage portion storing the main cause and the restoration material in correspondence with each other, the restoration material that corresponds to a material included in the material information and corresponds to the main cause.

4.  The tire management system (100) according to any one of claims 1 to 3, wherein

    the material information includes a rubber component constituting the tire (1), and
    the material decision processing portion (113) decides the restoration material corresponding to the rubber component included in the material information.

5.  The tire management system (100) according to any one of claims 1 to 4, wherein

    the material information includes a softening agent for softening the tire, and
    the material decision processing portion (113) decides the restoration material that is equivalent to the softening agent included in the material information.

6.  The tire management system (100) according to any one of claims 1 to 5, further comprising

    a material information storage portion in which is stored tire material data that includes tire identification information indicating the tire and the material information corresponding to the tire identification information, wherein
    upon an input of the tire identification information, the second acquisition processing portion extracts, from the tire material data, the material information corresponding to the tire identification information.

7.  The tire management system (100) according to claim 6, wherein

the tire material data includes, in addition to the tire identification information and the material information, first type information indicating a type of the tire, and

upon an input of second type information indicating a type of another tire that is different from the type of the tire, the second acquisition processing portion (112) determines whether or not the second type information and the first type information are equivalent to each other, and upon determining that they are equivalent, extracts, from the tire material data, the material information corresponding to the first type information, as the material information of the other tire.

8. A tire management method comprising:

a first acquisition step (S202) of acquiring cause history information concerning a cause of degradation of performance of a tire (1) mounted on a vehicle (50);

**characterized in that**

the tire management method further comprises:

a second acquisition step (S205) of acquiring material information concerning one or more materials constituting the tire; and

a material decision step (S209, S210) of deciding a restoration material for restoring the performance that has been degraded, based on the cause history information acquired by the first acquisition step (S202) and the material information acquired by the second acquisition step (S205).

9. A program for causing one or more processors to execute each step of the tire management method according to claim 8.

**Patentansprüche**

1. Reifenmanagementsystem (100), umfassend:

einen ersten Erfassungs-Verarbeitungsabschnitt (111), der konfiguriert ist, um Ursachenverlaufsinformationen zu erfassen, die eine Ursache einer Leistungsverschlechterung eines Reifens (1) betreffen, der an einem Fahrzeug (50) montiert ist;

**dadurch gekennzeichnet, dass**

das Reifenmanagementsystem (100) ferner umfasst:

einen zweiten Erfassungs-Verarbeitungsabschnitt (112), der konfiguriert ist, um Materialinformationen zu erfassen, die ein oder mehrere Materialien betreffen, die den Reifen (1) bilden; und

einen Materialentscheidungs-Verarbeitungsabschnitt (113), der konfiguriert ist, um ein Wiederherstellungsmaterial zum Wiederherstellen der Leistung, die sich verschlechtert hat, basierend auf den durch den ersten Erfassungs-Verarbeitungsabschnitt (111) erfassten Ursachenverlaufsinformationen und den durch den zweiten Erfassungs-Verarbeitungsabschnitt (112) erfassten Materialinformationen zu entscheiden.

2. Reifenmanagementsystem (100) nach Anspruch 1, wobei der Materialentscheidungs-Verarbeitungsabschnitt (113) umfasst:

einen Bestimmungsabschnitt (210), der konfiguriert ist, um einen Prozess zum Bestimmen eines verschlechterten Inhalts des Reifens basierend auf den Ursachenverlaufsinformationen durchzuführen; und

einen Auswahlabschnitt (220), der konfiguriert ist, um einen Prozess durchzuführen, um aus einem vorbestimmten Speicherabschnitt, der den verschlechterten Inhalt und das Wiederherstellungsmaterial in Übereinstimmung miteinander speichert, das Wiederherstellungsmaterial auszuwählen, das einem Material entspricht, das in den Materialinformationen enthalten ist, und dem verschlechterten Inhalt entspricht, der in einem durch den Bestimmungsabschnitt (210) durchgeführten Bestimmungsprozess bestimmt wird.

3. Reifenmanagementsystem (100) nach Anspruch 1, wobei

die Ursachenverlaufsinformationen einen Verlauf einer Vielzahl von Ursachen umfassen, und der Materialentscheidungs-Verarbeitungsabschnitt (113) eine Hauptursache einer Leistungsverschlechterung basierend auf den Ursachenverlaufsinformationen entscheidet und aus einem vorbestimmten Speicherabschnitt, der die Hauptursache und das Wiederherstellungsmaterial in Übereinstimmung miteinander speichert, das Wiederherstellungsmaterial auswählt, das einem Material entspricht, das in den Materialinformationen enthalten ist, und der Hauptursache entspricht.

4. Reifenmanagementsystem (100) nach einem der Ansprüche 1 bis 3, wobei

die Materialinformationen eine Gummikomponente umfassen, die den Reifen (1) bildet, und der Materialentscheidungs-Verarbeitungsabschnitt (113) das Wiederherstellungsmaterial entscheidet, das der Gummikomponente entspricht, die in den Materialinformationen enthalten ist.

5. Reifenmanagementsystem (100) nach einem der Ansprüche 1 bis 4, wobei

die Materialinformationen einen Weichmacher zum Erweichen des Reifens umfassen, und der Materialentscheidungs-Verarbeitungsabschnitt (113) das Wiederherstellungsmaterial entscheidet, das dem Weichmacher äquivalent ist, der in den Materialinformationen enthalten ist.

6. Reifenmanagementsystem (100) nach einem der Ansprüche 1 bis 5, ferner umfassend

einen Materialinformations-Speicherabschnitt, in dem Reifenmaterialdaten gespeichert sind, die Reifenidentifikationsinformationen, die den Reifen angeben, und die Materialinformationen umfassen, die den Reifenidentifikationsinformationen entsprechen, wobei bei einer Eingabe der Reifenidentifikationsinformationen der zweite Erfassungs-Verarbeitungsabschnitt aus den Reifenmaterialdaten die Materialinformationen extrahiert, die den Reifenidentifikationsinformationen entsprechen.

7. Reifenmanagementsystem (100) nach Anspruch 6, wobei

die Reifenmaterialdaten zusätzlich zu den Reifenidentifikationsinformationen und den Materialinformationen Informationen eines ersten Typs umfassen, die einen Typ des Reifens angeben, und bei einer Eingabe von Informationen eines zweiten Typs, die einen Typ eines anderen Reifens angeben, der sich von dem Typ des Reifens unterscheidet, der zweite Erfassungs-Verarbeitungsabschnitt (112) bestimmt, ob die Informationen des zweiten Typs und die Informationen des ersten Typs äquivalent sind oder nicht, und bei einer Bestimmung, dass sie äquivalent sind, aus den Reifenmaterialdaten die Materialinformationen, die den Informationen des ersten Typs entsprechen, als die Materialinformationen des anderen Reifens extrahiert.

8. Reifenmanagementverfahren, umfassend:
einen ersten Erfassungsschritt (S202) des Erfassens von Ursachenverlaufsinformationen, die eine Ursache einer Leistungsverschlechterung eines Reifens (1) betreffen, der an einem Fahrzeug (50) montiert ist;
**dadurch gekennzeichnet, dass**
das Reifenmanagementverfahren ferner umfasst:

einen zweiten Erfassungsschritt (S205) des Erfassens von Materialinformationen, die ein oder mehrere Materialien betreffen, die den Reifen bilden; und
einen Material-Entscheidungsschritt (S209, S210) des Entscheidens eines Wiederherstellungsmaterials zum Wiederherstellen der Leistung, die sich verschlechtert hat, basierend auf den durch den ersten Erfassungsschritt (S202) erfassten Ursachenverlaufsinformationen und den durch den zweiten Erfassungsschritt (S205) erfassten Materialinformationen.

9. Programm, um einen oder mehrere Prozessoren zu veranlassen, jeden Schritt des Reifenmanagementverfahrens nach Anspruch 8 auszuführen.

**Revendications**

1. Système de gestion de pneumatique (100) comprenant :

une première portion de traitement d'acquisition (111) configurée pour acquérir des informations d'historique de causes concernant une cause de dégradation d'une performance d'un pneumatique (1) monté sur un véhicule (50) ;
**caractérisé en ce que**
le système de gestion de pneumatique (100) comprend en outre :

une seconde portion de traitement d'acquisition (112) configurée pour acquérir des informations de matériaux concernant un ou plusieurs matériaux constituant le pneumatique (1) ; et
une portion de traitement de décision de matériau (113) configurée pour décider d'un matériau de restauration destiné à restaurer la performance qui a été dégradée, sur la base des informations d'historique de causes acquises par la première portion de traitement d'acquisition (111) et des informations de matériaux acquises par la seconde portion de traitement d'acquisition (112).

2. Système de gestion de pneumatique (100) selon la revendication 1, dans lequel
la portion de traitement de décision de matériau (113) inclut :

une portion de détermination (210) configurée pour effectuer un traitement pour déterminer une teneur détériorée du pneumatique sur la base des informations d'historique de causes ; et

une portion de sélection (220) configurée pour effectuer un traitement afin de sélectionner, à partir d'une portion de stockage prédéterminée stockant la teneur détériorée et le matériau de restauration en correspondance mutuelle, le matériau de restauration qui correspond à un matériau inclus dans les informations de matériaux et qui correspond à la teneur détériorée déterminée dans un traitement de détermination effectué par la portion de détermination (210).

3. Système de gestion de pneumatique (100) selon la revendication 1, dans lequel

les informations d'historique de causes incluent un historique d'une pluralité de causes, et la portion de traitement de décision de matériau (113) décide d'une cause de dégradation principale de la performance sur la base des informations d'historique de causes, et sélectionne, à partir d'une portion de stockage prédéterminée stockant la cause principale et le matériau de restauration en correspondance mutuelle, le matériau de restauration qui correspond au matériau inclus dans les informations de matériaux et qui correspond à la cause principale.

4. Système de gestion de pneumatique (100) selon l'une quelconque des revendications 1 à 3, dans lequel

les informations de matériaux incluent un composant de caoutchouc constituant le pneumatique (1), et la portion de traitement de décision de matériau (113) décide du matériau de restauration en correspondance avec le composant de caoutchouc inclus dans les informations de matériaux.

5. Système de gestion de pneumatique (100) selon l'une quelconque des revendications 1 à 4, dans lequel

les informations de matériaux incluent un agent ramollissant destiné à ramollir le pneumatique, et la portion de traitement de décision de matériau (113) décide du matériau de restauration qui est équivalent à l'agent ramollissant inclus dans les informations de matériaux.

6. Système de gestion de pneumatique (100) selon l'une quelconque des revendications 1 à 5, comprenant en outre

une portion de stockage d'informations de matériaux dans laquelle sont stockées des données de matériaux de pneumatique qui incluent des informations d'identification de pneumatique spécifiant le pneumatique et les informations de matériaux en correspondance avec les informations d'identification de pneumatique, dans lequel lors d'une entrée des informations d'identification de pneumatique, la seconde portion de traitement d'acquisition extrait, à partir des données de matériaux de pneumatique, les informations de matériaux en correspondance avec les informations d'identification de pneumatique.

7. Système de gestion de pneumatique (100) selon la revendication 6, dans lequel

les données de matériaux de pneumatique incluent, en addition aux informations d'identification de pneumatique et aux informations de matériaux, des informations de premier type indiquant un type du pneumatique, et lors d'une entrée d'informations de second type indiquant un type d'un autre pneumatique qui est différent du type du pneumatique, la seconde portion de traitement d'acquisition (112) détermine si oui ou non les informations de second type et les informations de premier type sont équivalentes l'une à l'autre, et lorsqu'il est déterminé qu'elles sont équivalentes, extrait, à partir des données de matériaux de pneumatique, les informations de matériaux en correspondance avec les informations de premier type, à titre d'informations de matériaux de l'autre pneumatique.

8. Procédé de gestion de pneumatique comprenant :

une première étape d'acquisition (S202) consistant à acquérir des informations d'historique de causes concernant une cause de dégradation d'une performance d'un pneumatique (1) monté sur un véhicule (50) ; **caractérisé en ce que** le procédé de gestion de pneumatique comprend en outre :

une seconde étape d'acquisition (S205) consistant à acquérir des informations de matériaux concernant un ou plusieurs matériaux constituant le pneumatique ; et une étape de décision de matériau (S209, S210) consistant à décider d'un matériau de restauration destiné à restaurer la performance qui a été dégradée, sur la base des informations d'historique de causes acquises par la première étape d'acquisition (S202) et des informations de matériaux acquises par la seconde étape d'acquisition (S205).

9. Programme destiné à amener un ou plusieurs processeurs à exécuter chaque étape du procédé de gestion de pneumatique selon la revendication 8.

FIG.1

FIG.2

FIG.3

FIG.4

MANAGEMENT APPARATUS 10

CONTROL PORTION 11

DATA ACQUIRING PORTION 111

BLEND INFORMATION ACQUIRING PORTION 112

REPAIR AGENT DECIDING PORTION 113

OUTPUT PROCESSING PORTION 115

STORAGE PORTION 12

COMMUNICATION PORTION 13

DISPLAY PORTION 14

OPERATION PORTION 15

COMMUNICATION APPARATUS 40

TEACHER DATA 30A

BLEND DATA 30B

30

FIG.5

TRAVEL HISTORY DATA

113

REPAIR AGENT
DECIDING PORTION

210

DETERMINATION
PROCESSING PORTION

LEARNING
MODEL

211

ADDITIVE CHANGE
AMOUNT

220

REPAIR AGENT
SELECTING PORTION

REPAIR AGENT INFORMATION

FIG.6

30B

| Tire information | | | Blend information | |
|---|---|---|---|---|
| Model number | Type | Size | Rubber component [phr] | Additive [phr] |
| A1001 | All-season | 160/50R16 | SBR[20], BR[60], NR[20] | CB[45], silica[20], antioxidant[2.0], stearic acid[1.5], aromatic oil[10], naphthenic oil[20], sulfur[1.5],······ |
| A1002 | All-season | 175/60R16 | SBR[80], BR[20] | CB[20], silica[50], antioxidant[1.5], stearic acid[1.5], paraffinic oil[10], naphthenic oil[15], sulfur[1.5],······ |
| ⋮ | ⋮ | ⋮ | ⋮ | ⋮ |
| A1101 | Studless | 160/50R16 | ··· | CB[20], silica[30], antioxidant[1.5], stearic acid[1.5], aromatic oil[10], sulfur[1.2],······ |
| A1102 | Studless | 175/60R16 | ··· | CB[30], silica[30], antioxidant[1.5], stearic acid[1.5], aromatic oil[5.0], paraffinic oil[5.0], sulfur[1.2],······ |
| ⋮ | ⋮ | ⋮ | ⋮ | ⋮ |
| A2001 | Summer tire | 215/65R16 | ··· | CB[40], silica[25], antioxidant[1.5], stearic acid[1.5], aromatic oil[10], sulfur[1.7],······ |
| A2002 | Summer tire | 215/65R16 | ··· | CB[35], silica[25], antioxidant[1.5], stearic acid[1.5], aromatic oil[5.0], paraffinic oil[15.0], sulfur[1.5],······ |
| ⋮ | ⋮ | ⋮ | ⋮ | ⋮ |

EP 4 316 874 B1

## FIG.7

```
              ┌─────────────┐
              │    START    │
              └──────┬──────┘
                     │              S101
              ┌──────▼──────────────────┐
              │ CALCULATE TIRE HARDNESS │
              └──────┬──────────────────┘
                     │
        ┌────────────▼─────────────┐
        │          HARDNESS        │  S102
   No   │  CHANGE AMOUNT IS EQUAL  │
 ◄──────│   TO OR HIGHER THAN      │
        │       THRESHOLD?         │
        └────────────┬─────────────┘
                     │ Yes
              ┌──────▼──────────────┐  S103
              │   TRANSMIT REPAIR AGENT  │
              │  DETERMINATION REQUEST   │
              └──────┬──────────────┘
                     │              S104
              ┌──────▼──────────────┐
              │  ACQUIRE TIRE INFORMATION │
              │  AND TRAVEL HISTORY DATA  │
              └──────┬──────────────┘
                     │              S105
              ┌──────▼──────────────┐
              │ TRANSMIT TIRE INFORMATION │
              │  AND TRAVEL HISTORY DATA  │
              └──────┬──────────────┘
                     │
        ┌────────────▼─────────────┐  S106        No
        │      REPAIR AGENT        │──────────┐
        │  INFORMATION RECEIVED?   │          │
        └────────────┬─────────────┘          │
                     │ Yes           ┌─────────▼──────────┐  S108   No
                     │               │    DETERMINATION   │────►
                     │               │ IMPOSSIBLE RECEIVED?│
                     │               └─────────┬──────────┘
                     │                         │ Yes    S109
                     │               ┌─────────▼──────────┐
                     │               │ DISPLAY DETERMINATION │
                     │               │ IMPOSSIBLE MESSAGE AND│
                     │               │    GUIDE MESSAGE      │
                     │               └─────────┬──────────┘
                     │                         │
              ┌──────▼──────────────┐  S107     │
              │   DISPLAY REPAIR AGENT  │◄───────┘
              └──────┬──────────────┘
                     │
              ┌──────▼──────┐
              │     END     │
              └─────────────┘
```

# FIG8

**START**

**S201** — DETERMINATION REQUEST RECEIVED? — No / Yes

**S202** — TIRE INFORMATION AND TRAVEL HISTORY DATA RECEIVED? — No / Yes

**S203** — COLLATION BY MODEL NUMBER

**S204** — COLLATION MATCH? — Yes / No

**S205** — ACQUIRE CORRESPONDING PIECE OF BLEND INFORMATION

**S206** — COLLATION BY TYPE AND SIZE

**S207** — COLLATION MATCH? — Yes / No

**S208** — TRANSMIT DETERMINATION IMPOSSIBLE

REPAIR AGENT DECISION PROCESS

**S209** — DETERMINE ADDITIVE CHANGE AMOUNT

**S210** — SELECT REPAIR AGENT CORRESPONDING TO ADDITIVE CHANGE AMOUNT

**S211** — CALCULATE REPAIR TIME

**S212** — TRANSMIT REPAIR AGENT INFORMATION

**END**

# FIG.9

REPAIR AGENT
DECISION PROCESS

(S205)

DETERMINE ADDITIVE
CHANGE AMOUNT  S209

SELECT REPAIR AGENT
CORRESPONDING TO ADDITIVE
CHANGE AMOUNT  S210

IDENTIFY RUBBER
COMPONENT FROM BLEND
INFORMATION  S2101

IS THERE REPAIR
AGENT CORRESPONDING TO
RUBBER COMPONENT?  S2102

No

Yes

NARROW DOWN REPAIR
AGENT  S2103

(S211)

FIG.10

121

| RUBBER COMPONENT | REPAIR AGENT | |
| --- | --- | --- |
| | TYPE | SP VALUE |
| NR<br>(80 PHR OR MORE) | PARAFFINIC OIL | LOW |
| BLEND OF NR AND BR,<br>BLEND OF NR AND SBR,<br>OR BLEND OF NR, BR, AND SBR | NAPHTHENIC OIL | |
| BR (80 PHR OR MORE) OR SBR<br>(80 PHR OR MORE) | AROMATIC OIL | HIGH |

# FIG.11

REPAIR AGENT
DECISION PROCESS

S205

S209A
DETERMINE MAIN CAUSE
FOR DEGRADATION OF
PERFORMANCE

S210A
SELECT REPAIR AGENT
CORRESPONDING TO MAIN
CAUSE

S211

FIG.12

60
CONTROL UNIT

61
CONTROL PORTION

611 — DISPLAY PROCESSING PORTION

612 — ARITHMETIC PROCESSING PORTION

613 — HARDNESS CALCULATION PROCESSING PORTION

614 — REPAIR DETERMINATION PROCESSING PORTION

615 — TIMING CALCULATION PROCESSING PORTION

616 — NOTIFICATION OUTPUT PROCESSING PORTION

STORAGE PORTION — 62

COMMUNICATION PORTION — 63

GPS RECEIVING PORTION — 64

65
OUTPUT PORTION

66
INPUT PORTION

FIG.13

START

↓

CALCULATE TIRE HARDNESS — S301

↓

DOES TIRE NEED TO BE REPAIRED? — S302
No →

Yes ↓

OUTPUT REPAIR RECOMMENDATION MESSAGE — S303

CALCULATE HARDNESS CHANGE RATE — S304

↓

CALCULATE REQUIRED TRAVEL DISTANCE — S305

↓

CALCULATE REPAIR RESERVATION DATE/TIME — S306

↓

OUTPUT REQUIRED TRAVEL DISTANCE AND REPAIR RESERVATION INFORMATION TO VEHICLE — S307

↓

No ← APPROVAL SIGNAL INPUT? — S308

Yes ↓

TRANSMIT REPAIR RESERVATION INFORMATION TO INFORMATION TERMINAL OF REPAIR BUSINESS OFFICE — S309

END

# FIG.14

60

CONTROL UNIT

61

CONTROL PORTION

611 — DISPLAY PROCESSING PORTION

612 — ARITHMETIC PROCESSING PORTION

613 — HARDNESS CALCULATION PROCESSING PORTION

614 — REPAIR DETERMINATION PROCESSING PORTION

615 — TIMING CALCULATION PROCESSING PORTION

616 — NOTIFICATION OUTPUT PROCESSING PORTION

617 — REPAIR END DETERMINATION PROCESSING PORTION

618 — RESTORATION RATIO CALCULATION PROCESSING PORTION

STORAGE PORTION — 62

COMMUNICATION PORTION — 63

GPS RECEIVING PORTION — 64

65

OUTPUT PORTION

66

INPUT PORTION

# FIG.15

```
                    ┌─────────────┐
                    │    START    │
                    └─────────────┘
                           │
                           ▼
          No         ╱──────────────╲        S401
      ◄──────────── ╱ REPAIR COMPLETED? ╲
                    ╲──────────────╱
                           │ Yes
                           ▼
              ┌──────────────────────┐  S402
              │ CALCULATE TIRE HARDNESS │
              │     AFTER REPAIR       │
              └──────────────────────┘
                           │
                           ▼
              ┌──────────────────────┐  S403
              │      CALCULATE        │
              │  RESTORATION RATIO    │
              └──────────────────────┘
                           │
                           ▼
              ┌──────────────────────┐  S404
              │  TRANSMIT RESTORATION  │
              │        RATIO          │
              └──────────────────────┘
                           │
                           ▼
                    ┌─────────────┐
                    │     END     │
                    └─────────────┘
```

FIG.16

MANAGEMENT APPARATUS — 10

CONTROL PORTION — 11

111 — DATA ACQUIRING PORTION

114 — INPUT RECEIVING PORTION

112 — BLEND INFORMATION ACQUIRING PORTION

113 — REPAIR AGENT DECIDING PORTION

115 — OUTPUT PROCESSING PORTION

STORAGE PORTION — 12

COMMUNICATION PORTION — 13

DISPLAY PORTION — 14

OPERATION PORTION — 15

40 — COMMUNICATION APPARATUS

TEACHER DATA — 30A

BLEND DATA — 30B

— 30

FIG.17

## TIRE INFORMATION INPUT

MODEL NUMBER    A1002    171

USE    ALL-SEASON    172

SIZE    175/60R16    173

MANUFACTURING DATE    DECEMBER, 2018    174

TRAVEL DISTANCE    20000   km    175

HARDNESS    3   Pt    176

SOFTENING AGENT BLEND INFORMATION    81

| No. | NAME | CONTENT |
|-----|------|---------|
| 1 | | |
| 2 | | |
| 3 | | |

RECOMMENDED REPAIR AGENT    82

| NAME | REPAIR TIME |
|------|-------------|
| | |

RETURN      INPUT      EXECUTION

91             92     93

141     14

FIG.18

### TIRE INFORMATION INPUT

MODEL NUMBER    A1002  ～171

USE    ALL-SEASON  ～172

SIZE    175/60R16  ～173

MANUFACTURING DATE    DECEMBER, 2018  ～174

TRAVEL DISTANCE    20000    km  ～175

HARDNESS    3    Pt  ～176

SOFTENING AGENT BLEND INFORMATION    81

| No. | NAME | CONTENT |
|---|---|---|
| 1 | AROMATIC OIL | 5phr |
| 2 | PARAFFINIC OIL | 10phr |
| 3 | ⋮ | |

RECOMMENDED REPAIR AGENT    82

| NAME | REPAIR TIME |
|---|---|
| AROMATIC OIL | 5 |

RETURN    INPUT    EXECUTION

141    14

91    92    93

# FIG.19

```
                    ┌─────────────┐
                    │    START    │
                    └──────┬──────┘
                           │
        ┌──────────────────┤
        │                  ▼
       No         ◇─────────────────◇  S501
        │        ╱   DETERMINATION   ╲
        └───────<    REQUEST INPUT?   >
                 ╲                   ╱
                  ◇─────────────────◇
                           │ Yes
                           ▼
              ┌──────────────────────────┐  S502
              │  DISPLAY TIRE INFORMATION │
              │       INPUT SCREEN        │
              └────────────┬─────────────┘
                           │
        ┌──────────────────┤
        │                  ▼
       No           ◇──────────◇  S503
        │         ╱    TIRE      ╲
        └────────<  INFORMATION   >
                  ╲    INPUT?    ╱
                   ◇──────────◇
                        │ Yes
                        ▼
              ┌──────────────────────┐  S504
              │  COLLATION BY MODEL   │
              │        NUMBER         │
              └──────────┬───────────┘
                         │
                         ▼
              ◇──────────────────◇  S505          No
             ╱  COLLATION MATCH?  ╲───────────────────────┐
              ◇──────────────────◇                        ▼
                    │ Yes                      ┌────────────────────────┐  S507
          S506      ▼                          │  COLLATION BY TYPE AND │
    ┌──────────────────────────────┐          │          SIZE          │
    │  ACQUIRE CORRESPONDING PIECE  │◄──┐      └───────────┬────────────┘
    │      OF BLEND INFORMATION     │   │                  │
    └──────────────┬───────────────┘   │                  ▼
                   │                    │      ◇──────────────────◇  S508
                   ▼                Yes │     ╱  COLLATION MATCH?  ╲
    ┌──────────────────────────┐       └────<                      >
    │  DISPLAY SOFTENING AGENT  │  S510       ◇──────────────────◇
    │       INFORMATION         │                      │ No
    └──────────────┬───────────┘                       ▼  S509
                   │                       ┌────────────────────────┐
        ┌──────────┤                       │  DISPLAY DETERMINATION │
        │          ▼                       │       IMPOSSIBLE        │
       No   ◇──────────────◇  S511         └───────────┬────────────┘
        │  ╱   EXECUTION     ╲                          │
        └─<  INSTRUCTION INPUT?>                        ▼
           ◇──────────────◇                     ┌─────────────┐
                 │ Yes                          │     END     │
                 ▼  S512                        └─────────────┘
    ┌──────────────────────────┐
    │  ACQUIRE TRAVEL HISTORY   │
    │          DATA             │
    └──────────────┬───────────┘
                   │
                   ▼
                ( S209 )
```

# FIG.20

REPAIR AGENT
DECISION PROCESS

S512

DETERMINE ADDITIVE CHANGE AMOUNT — S513

SELECT REPAIR AGENT CORRESPONDING TO ADDITIVE CHANGE AMOUNT — S514

CALCULATE REPAIR TIME — S515

DISPLAY REPAIR AGENT INFORMATION — S516

END

**REFERENCES CITED IN THE DESCRIPTION**

**Patent documents cited in the description**

- US 2020148010 A1
- JP 2018114781 A
- JP 2010076702 A